# EUROPÄISCHE PATENTSCHRIFT

(11) **EP 1 470 173 B1**
(45) Veröffentlichungstag und Bekanntmachung des Hinweises auf die Patenterteilung: **01.03.2017**
(21) Anmeldenummer: 03729482.4
(22) Anmeldetag: 17.01.2003
(51) Int. Cl.: C08G 18/10, C08G 18/08, C08G 18/66, C08G 18/32, C09J 175/08

(54) **ZWEIKOMPONENTIGE POLYURETHANZUSAMMENSETZUNG MIT HOHER FR HFE STIGKEIT**
TWO-CONSTITUENT POLYURETHANE COMPOSITION HAVING HIGH EARLY STRENGTH
COMPOSITION DE POLYURETHANNE A DEUX COMPOSANTS, PRESENTANT UNE GRANDE RESISTANCE INITIALE

(30) Priorität: 18.01.2002 EP 02001289; 26.07.2002 EP 02016729; 26.07.2002 EP 02016755
(43) Veröffentlichungstag der Anmeldung: 27.10.2004
(73) Patentinhaber: Sika Technology AG, 6340 Baar (CH)
(72) Erfinder: BURCKHARDT, Urs, CH-8057 Zürich (CH); STADELMANN, Ursula, CH-8046 Zürich (CH); KONSTANZER, Martin, CH-8048 Zürich (CH)
(74) Vertreter: Isler, Jörg
(86) Internationale Anmeldenummer: PCT/EP2003/000456
(87) Internationale Veröffentlichungsnummer: WO 2003/059978

(56) Entgegenhaltungen:
- EP-A- 0 469 751
- EP-A- 0 477 060
- EP-A- 0 678 544
- US-A- 4 853 454
- US-A- 6 136 942

## Beschreibung

### Technisches Gebiet

Die Erfindung betrifft zweikomponentige Polyurethanzusammensetzungen mit einer hohen Frühfestigkeit, bestehend aus einer ersten Komponente **(A),** welche auch allein durch Reaktion mit Luftfeuchtigkeit aushärtet, und einer zweiten Komponente **(B),** welche an ein Trägermaterial reversibel gebundenes Wasser enthält.

### Stand der Technik

Polyurethanzusammensetzungen werden unter anderem eingesetzt für verschiedenartige Verklebungen, Abdichtungen und Beschichtungen. Speziell geeignet sind sie für Verklebungen oder Abdichtungen, welche eine Elastizität der Klebeverbindung erfordern. Für gewisse Klebeanwendungen ist es erforderlich, dass die Klebeverbindung schon kurz nach der Applikation des Klebstoffes einer mechanischen Belastung ausgesetzt wird, beispielsweise weil die verklebten Bauteile bewegt werden, oder weil eine allfällige Fixierung entfernt werden soll. Um solche frühzeitigen Belastungen zu ermöglichen, ist es für einen Klebstoff vorteilhaft, wenn er eine hohe Frühfestigkeit aufweist; das heisst, die Klebeverbindung ist bis zu einem gewissen Grad belastbar, noch bevor eine vollständige Aushärtung erfolgt ist. Praxistaugliche Anforderungen an die Frühfestigkeit bezüglich Zeitpunkt und mechanische Belastung variieren je nach Anwendung sehr stark und hängen ab vom konkreten Fertigungsprozess, dem Gewicht der verklebten Bauteile sowie der Art der mechanischen Belastung.

Mit konventionellen zweikomponentigen Polyurethansystemen lassen sich hohe Frühfestigkeiten erreichen, und zwar besonders dann, wenn sie in ihrer zweiten Komponente primäre oder sekundäre Aminogruppen enthalten. Solche zweikomponentigen Polyurethanzusammensetzungen sind jedoch aufwändig in der Handhabung, da einerseits das festgelegte Mischungsverhältnis der beiden Komponenten sehr genau eingehalten werden muss und andererseits die Vermischung der Komponenten sehr gut und homogen erfolgen muss. Anderenfalls entsteht eine mangelhafte Verklebung, welche die erforderlichen Festigkeiten bei weitem nicht erreicht, oder das System härtet überhaupt nicht aus. Die Vermischung der beiden Komponenten muss aufgrund der sehr hohen Reaktivität der Aminogruppen gegenüber den Isocyanatgruppen überdies sehr rasch und effizient erfolgen und erlaubt keine Prozessunterbrüche, weil der Mischer sonst verstopft. Die hohe Reaktivität führt auch zu einer sehr schnellen Aushärtung und damit zu sehr kurzen Verarbeitungszeiten (Topfzeiten und Offenzeiten), wodurch eine sorgfältige Verarbeitung je nach Anwendung erschwert oder sogar verunmöglicht werden kann.

Einfacher in der Handhabung sind einkomponentige Polyurethanzusammensetzungen. Sie enthalten Polyurethanprepolymere mit Isocyanatendgruppen, welche bei Kontakt mit Wasser in Form von Luftfeuchtigkeit reagieren und somit vernetzen. Da die Aushärtung durch den Kontakt mit Luftfeuchtigkeit erfolgt, härten diese Systeme von aussen nach innen aus, wobei die Aushärtungsgeschwindigkeit gegen innen abnimmt, da das für die Aushärtung erforderliche Wasser durch die zunehmend dicker werdende ausgehärtete Materialschicht hindurchdiffundieren muss. Wegen der relativ langsamen Aushärtung lassen sich mit solchen einkomponentigen Polyurethanzusammensetzungen nur unbefriedigende Frühfestigkeiten erreichen.

Um das Problem der geringen Verfügbarkeit von Wasser und damit langsamen Aushärtung in einer einkomponentigen Polyurethanzusammensetzung zu lösen, wurden Systeme entwickelt, in denen Wasser in Form einer wasserhaltigen zweiten Komponente zu einer einkomponentigen Polyurethanzusammensetzung eingemischt wird, beschrieben beispielsweise in EP 0 678 544. Diese Systeme verfügen nun zwar über eine deutlich erhöhte Aushärtungsgeschwindigkeit; sie weisen aber den gravierenden Nachteil auf, dass sie bei der Aushärtung zur Ausbildung von störenden Blasen neigen, welche die Festigkeit und das Adhäsionsverhalten beispielsweise einer Klebeverbindung negativ beeinflussen können. Das Auftreten von Blasen ist ein generelles Problem von isocyanathaltigen Systemen, welche mit Wasser aushärten, da bei der Reaktion zwischen Isocyanatgruppen und Wasser Kohlendioxid-Gas (CO₂) freigesetzt wird. Dieses kann sich, bei schneller Freisetzung und ungenügender Löslichkeit in der Zusammensetzung oder zu langsamer Diffusion durch diese hindurch nach aussen, in Form von Gasblasen ansammeln, wodurch das ausgehärtete Material mehr oder weniger stark aufgeschäumt wird, was oft zu einer empfindlichen Störung der Gebrauchseigenschaften führt.

US 4,469,857 beschreibt ein zweikomponentiges Polyurethansystem, welches in der isocyanathaltigen ersten Komponente, welche auch allein durch Reaktion mit Luftfeuchtigkeit aushärtet, Polyenamine als blockierte Härtungsmittel enthält. Polyenamine weisen jedoch generell den Nachteil auf, dass die Lagerstabilität in Kombination mit isocyanathaltigen Verbindungen ungenügend ist, insbesondere in Kombination mit reaktiven aromatischen Isocyanaten wie beispielsweise MDI und TDI.

US 5,194,488 beschreibt einen zweikomponentigen Polyurethandichtstoff für das Verkleben von Autoscheiben mit einer schnellen Aushärtung bei einer relativ langen Verarbeitungszeit, welcher aus einer isocyanathaltigen ersten Komponente mit einem blockierten Härtungsmittel und einer wasserhaltigen zweiten Komponente besteht, welche das Wasser verzögert freisetzt. Als blockiertes Härtungsmittel wird bevorzugt ein amingefülltes Molekularsieb oder ein Enamin oder Ketimin oder Oxazolidin verwendet. Die Verwendung amingefüllter Molekularsiebe als blockiertes Härtungsmittel in Isocyanatgruppen-enthaltenden Polyurethanzusammensetzungen führt erfahrungsgemäss zu einer deutlichen Blasenbildung bei der Aushärtung. Weiterhin bietet die Verwendung von Molekularsieben nur einen engen Spielraum für die Auswahl der einsetzbaren Polyamine, da deren Grösse auf die Porengrösse des Molekularsiebs abgestimmt sein muss. Deshalb kommen nur kleine Diamine wie Ethylendiamin in Frage. Solche Amine üben einen starken Einfluss auf die mechanischen Eigenschaften der ausgehärteten Zusammensetzung aus; insbesondere wird die Steifigkeit (E-Modul) stark erhöht, was besonders für weichelastische Verklebungen oder Abdichtungen unerwünscht ist. Die Verwendung von Enaminen oder Ketiminen oder Oxazolidinen als blockierte Härtungsmittel in isocyanathaltigen Systemen führt andererseits zu Problemen mit der Lagerstabilität der isocyanathaltigen ersten Komponente, insbesondere wenn reaktive aromatische Isocyanate wie beispielsweise MDI und TDI vorhanden sind.

Praxistaugliche Systeme, in welchen eine wasserhaltige oder eine Wasser freisetzende Paste zu einer mit Feuchtigkeit auch allein aushärtenden, aromatische Isocyanate enthaltenden Polyurethanzusammensetzung gemischt wird und die bei der Aushärtung keine Blasen bilden und eine hohe Frühfestigkeit aufweisen, sind bisher nicht bekannt.

### Darstellung der Erfindung

Aufgabe der vorliegenden Erfindung ist es, eine zweikomponentige Polyurethanzusammensetzung zur Verfügung zu stellen, welche eine hohe Frühfestigkeit aufweist, schnell aushärtet und dennoch keine Blasen bildet.

Überraschenderweise wurde gefunden, dass dies durch eine zweikomponentige Polyurethanzusammensetzung erreicht werden kann, bei welcher die erste Komponente **(A)** mindestens ein Polyurethanprepolymer mit Isocyanatendgruppen, welches aus mindestens einem aromatischen Polyisocyanat und mindestens einem Polyol hergestellt wird, und mindestens ein Polyaldimin, welches erhältlich ist aus einem mindestens einem Polyamin mit aliphatischen primären Aminogruppen und mindestens einem Aldehyd, der in α-Stellung zur Carbonylgruppe keine C-H-Gruppierung aufweist, enthält, sowie bei welcher die zweite Komponente **(B)** Wasser an ein Trägermaterial gebunden enthält.

Mit einer solchen zweikomponentigen Polyurethanzusammensetzung können praxistaugliche Systeme formuliert werden, die eine hohe Frühfestigkeit erreichen und schnell aushärten, ohne dass Blasen entstehen. Weiterhin zeigte sich unerwarteterweise, dass solche zweikomponentigen Polyurethanzusammensetzungen trotz ihrer raschen Aushärtung eine ausgezeichnete Haftung auf diversen Festkörperoberflächen zeigen. Dies ist umso überraschender, als schnell aushärtende reaktive Polyurethansysteme erfahrungsgemäss eine bedeutend schlechtere Haftung aufweisen als langsam aushärtende. Ausserdem bildet bereits die erste Komponente **(A)** allein eine praxistaugliche, einkomponentige Polyurethanzusammensetzung, welche durch Luftfeuchtigkeit ausgehärtet werden kann. Die mechanischen Eigenschaften nach Aushärtung der langsam durch Luftfeuchtigkeit ausgehärteten einkomponentigen Polyurethanzusammensetzung, entsprechend der ersten Komponente **(A)** der erfindungsgemässen zweikomponentigen Polyurethanzusammensetzung, sind dabei vergleichbar gut wie die der erfindungsgemässen zweikomponentigen Zusammensetzung, bei der an ein Trägermaterial gebundenes Wasser zu einer schnellen Aushärtung führt.

### Weg zur Ausführung der Erfindung

Die vorliegende Erfindung betrifft eine zweikomponentige Zusammensetzung, bei welcher die erste Komponente **(A)** mindestens ein Polyurethanprepolymer mit Isocyanatendgruppen, welches aus mindestens einem aromatischen Polyisocyanat und mindestens einem Polyol hergestellt wird, und mindestens ein Polyaldimin, welches erhältlich ist aus mindestens einem Polyamin mit aliphatischen primären Aminogruppen und mindestens einem Aldehyd, der in α-Stellung zur Carbonylgruppe keine C-H-Gruppierung aufweist, enthält, sowie bei welcher die zweite Komponente **(B)** Wasser reversibel an ein Trägermaterial gebunden enthält.

Unter "Poly" in "Polyaldimin", "Polyol", "Polyisocyanat", "Polyamin" werden im vorliegenden Dokument Moleküle verstanden, die formal zwei oder mehr der jeweiligen funktionellen Gruppen enthalten.

Der Begriff "Polyurethan" umfasst im vorliegenden Dokument sämtliche Polymere, welche nach dem Diisocyanat-Polyadditions-Verfahren hergestellt werden. Dies schliesst auch solche Polymere ein, die nahezu oder gänzlich frei sind von Urethangruppen, wie Polyether-Polyurethane, Polyester-Polyurethane, Polyether-Polyharnstoffe, Polyharnstoffe, Polyester-Polyharnstoffe, Polyisocyanurate, Polycarbodiimide, usw.

Der Begriff "Polyamine mit aliphatischen primären Aminogruppen" bezeichnet im vorliegenden Dokument stets Verbindungen, die formal zwei oder mehr NH₂-Gruppen enthalten, die an einen aliphatischen, cycloaliphatischen oder arylaliphatischen Rest gebunden sind. Sie unterscheiden sich damit von den aromatischen Aminen, in welchen die Aminogruppen direkt an einen aromatischen Rest gebunden sind, wie beispielsweise in Anilin oder 2-Aminopyridin.

Der Begriff "Aldehyd, der in α-Stellung zur Carbonylgruppe keine C-H-Gruppierung aufweist" bezeichnet im vorliegenden Dokument einen Aldehyd oder eine Formylgruppen-haltige Verbindung, bei welchen das in α-Stellung (2-Stellung) zur Formylgruppe stehende Kohlenstoffatom keine Bindung zu einem Wasserstoffatom aufweist. Mit anderen Worten handelt es sich hier um einen Aldehyd, der nicht enolisierbar ist, d.h. der keine Keto-Enol-Tautomerie aufweist.

Das Polyaldimin ist herstellbar aus mindestens einem Polyamin mit aliphatischen primären Aminogruppen und mindestens einem Aldehyd durch eine Kondensationsreaktion unter Abspaltung von Wasser. Solche Kondensationsreaktionen sind bestens bekannt und beschrieben, beispielsweise in Houben-Weyl, "Methoden der organischen Chemie", Vol. XI/2, Seite 73 ff.

Als Polyamine mit aliphatischen primären Aminogruppen zur Herstellung des Polyaldimins kommen die in der Polyurethanchemie bekannten Polyamine in Frage, wie sie unter anderem für zweikomponentige Polyurethane verwendet werden. Als Beispiele seien die folgenden erwähnt: Aliphatische Polyamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexamethylendiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-amino-propyl)amin, 1,5-Diamino-2-methylpentan (MPMD), 1,3-Diaminopentan (DAMP), 2,5-Dimethyl-1,6-hexamethylendiamin, cycloaliphatische Polyamine wie 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)-cyclohexan, 1-Cyclohexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo[5.2.1.0^{2,6}]decan, 1,4-Diamino-2,2,6-trimethylcyclohexan (TMCDA), 3,9-Bis-(3-aminopropyl)-2,4,8,10-tetraoxaspiro[5.5]undecan, 1,3-und 1,4-Xylylendiamin, Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit theoretisch zwei oder drei Aminogruppen, erhältlich beispielsweise unter dem Namen Jeffamine^{®} (hergestellt von Huntsman Chemicals), sowie Mischungen der vorgenannten Polyamine.

Bevorzugte Polyamine sind 1,6-Hexamethylendiamin, MPMD, DAMP, IPDA, 4-Aminomethyl-1,8-octandiamin, 1,3-Xylylendiamin, 1,3-Bis-(amino-methyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan, 1,4-Diamino-2,2,6-trimethylcyclohexan, Polyoxyalkylen-Polyamine mit theoretisch zwei oder drei Aminogruppen, insbesondere Jeffamine^{®} EDR-148, Jeffamine^{®} D-230, Jeffamine^{®} D-400 und Jeffamine^{®} T-403, sowie insbesondere Mischungen von zwei oder mehr der vorgenannten Polyamine.

Das in der erfindungsgemässen Zusammensetzung enthaltene Polyaldimin ist erhältlich aus mindestens einem Polyamin mit aliphatischen primären Aminogruppen und aus mindestens einem Aldehyd. Es ist ein wesentliches Merkmal der Erfindung, dass dieser Aldehyd in α-Stellung zur Carbonylgruppe keine C-H-Gruppierung aufweist. Es sind dementsprechend alle solche Aldehyde geeignet, die nicht enolisieren können und demzufolge die daraus hergestellten Polyaldimine keine Enamine bilden können.

In einer ersten Ausführungsform werden Aldehyde der folgenden Formel (I) verwendet:

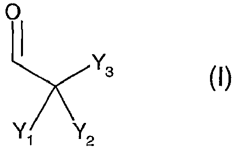

Einerseits stellen hierbei Y₁, Y₂, Y₃ unabhängig voneinander Alkyl- oder Arylalkyl-Gruppen dar, die gegebenenfalls jeweils substituiert sein können.

Andererseits kann Y₁ eine Oxy-Gruppe O-Y₄ darstellen, wobei Y₄ eine, gegebenenfalls substituierte, Alkyl- oder Arylalkyl- oder Aryl-Gruppe darstellt, und Y₂ und Y₃ unabhängig voneinander Alkyl- oder Arylalkyl-Gruppen darstellen, die gegebenenfalls jeweils substituiert sein können.

Schliesslich können Y₁ und Y₂ miteinander zu einem carbocyclischen oder heterocyclischen Ring verbunden sein, welcher eine Ringgrösse zwischen 5 und 8, bevorzugt 6, Atomen, und gegebenenfalls eine oder zwei einfach ungesättigte Bindungen aufweist.

Beispiele für Aldehyde der Formel (I) sind 2,2-Dimethylpropanal, 2-Cyclopentylpropanal, 2-Cyclohexylpropanal, 2,2-Diethylbutanal, 3-Methoxy-und 3-Ethoxy- und 3-Propoxy- und 3-Isopropoxy und 3-Butoxy-2,2-dimethylpropanal, 3-(2-Ethylhexoxy)-2,2-dimethylpropanal, Ester aus 2-Formyl-2-methylpropionsäure und Alkoholen wie Methanol, Ethanol, Propanol, Isopropanol, Butanol und 2-Ethylhexanol, Ether aus 2-Hydroxy-2-methylpropanal und Alkoholen wie Methanol, Ethanol, Propanol, Isopropanol, Butanol und 2-Ethylhexanol, Ester aus 2-Hydroxy-2-methylpropanal und Carbonsäuren wie Ameisensäure, Essigsäure, Propionsäure, Buttersäure, Isobuttersäure und 2-Ethylhexansäure.

In einer weiteren Ausführungsform werden Aldehyde der folgenden Formel (II) verwendet: 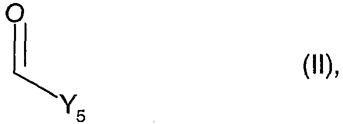 wobei Y₅ eine, gegebenenfalls substituierte, Aryl- oder Heteroaryl-Gruppe darstellt, welche eine Ringgrösse zwischen 5 und 8, bevorzugt 6, Atomen aufweist. Die Heteroatome im Heteroaryl-Ring sind vorzugsweise Stickstoff und Sauerstoff.

Beispiele für Aldehyde der Formel (II) sind Benzaldehyd, 2- und 3- und 4-Tolualdehyd, 4-Ethyl- und 4-Propyl- und 4-Isopropyl und 4-Butylbenzaldehyd, 2,4-Dimethylbenzaldehyd, 2,4,5-Trimethylbenzaldehyd, 4-Acetoxybenzaldehyd, 4-Anisaldehyd, 4-Ethoxybenzaldehyd, 2- und 3- und 4-Formylpyridin, 2-Furfuraldehyd, 1-und 2-Naphthylaldehyd, 3- und 4-Phenyloxybenzaldehyd; Chinolin-2-carbaldehyd und dessen 3-, 4-, 5-, 6-, 7- und 8-Steilungsisomere, Anthracen-9-carbaldehyd.

In einer weiteren Ausführungsform werden Aldehyde der folgenden Formel (III) verwendet:

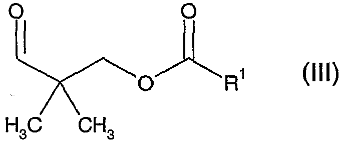

Für R¹ sind 3 Möglichkeiten vorhanden:
R¹ steht einerseits für eine lineare oder verzweigte Alkylkette, gegebenenfalls mit mindestens einem Heteroatom, insbesondere mit mindestens einem Ether-Sauerstoff, oder für eine einfach oder mehrfach ungesättigte lineare oder verzweigte Kohlenwasserstoffkette.

R¹ steht andererseits für einen Rest der folgenden Formel (IV):

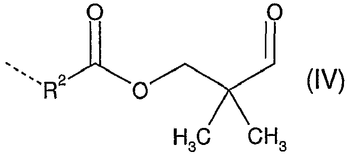

R¹ steht schliesslich für einen Rest der folgenden Formel (V): 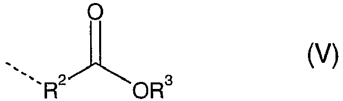
R² steht hierbei für eine lineare oder verzweigte oder cyclische Alkylenkette, gegebenenfalls mit mindestens einem Heteroatom, insbesondere mit mindestens einem Ether-Sauerstoff, oder für eine einfach oder mehrfach ungesättigte lineare oder verzweigte oder cyclische Kohlenwasserstoffkette.
R³ steht für eine lineare oder verzweigte Alkylkette.

Beispiele für bevorzugte Aldehyde der Formel (III) sind 2,2-Dimethyl-3-formoxy-propanal, 2,2-Dimethyl-3-acetoxy-propanal, 2,2-Dimethyl-3-propionoxy-propanal, 2,2-Dimethyl-3-butyroxy-propanal 2,2-Dimethyl-3-isobutyroxy-propanal, 2,2-Dimethyl-3-(2-ethylhexanoyloxy)-propanal und die im folgenden als besonders bevorzugt aufgeführten Aldehyde.

In einer besonders bevorzugten Ausführungsform werden Aldehyde der Formel (III) verwendet, deren Reste R¹, R² und R³ folgendermassen eingeschränkt sind:
R¹ steht für eine lineare oder verzweigte Alkylkette mit 11 bis 30 Kohlenstoff-Atomen, gegebenenfalls mit mindestens einem Heteroatom, insbesondere mit mindestens einem Ether-Sauerstoff, oder für eine einfach oder mehrfach ungesättigte lineare oder verzweigte Kohlenwasserstoffkette mit 11 bis 30 Kohlenstoff-Atomen, oder für einen Rest der Formel (IV) oder (V).

Hierbei steht R² für eine lineare oder verzweigte oder cyclische Alkylenkette mit 2 bis 16 Kohlenstoff-Atomen, gegebenenfalls mit mindestens einem Heteroatom, insbesondere mit mindestens einem Ether-Sauerstoff, oder für eine einfach oder mehrfach ungesättigte lineare oder verzweigte oder cyclische Kohlenwasserstoffkette mit 2 bis 16 Kohlenstoff-Atomen.

Hierbei steht R³ für eine lineare oder verzweigte Alkylkette mit 1 bis 8 Kohlenstoff-Atomen.

Diese Ausführungsform der Erfindung ermöglicht es, Polyurethanzusammensetzungen ohne störenden Geruch herzustellen. Dies ist äusserst vorteilhaft für Anwendungen im Innenbereich von Bauwerken und Fahrzeugen oder bei grossflächigen Anwendung.

In einer bevorzugten Herstellmethode des Aldehyds der Formel (III) wird 3-Hydroxypivalaldehyd, welches beispielsweise aus Formaldehyd (oder Paraformaldehyd) und Isobutyraldehyd, gegebenenfalls in situ, hergestellt werden kann, mit einer Carbonsäure, insbesondere einer langkettigen Fettsäure, zum entsprechenden Ester umgesetzt, nämlich entweder mit Carbonsäure R¹-COOH zum entsprechenden Carbonsäureester von 3-Hydroxypivalaldehyd; und / oder mit einem Dicarbonsäuremonoalkylester HOOC-R²-COOR³ zum Aldehyd der Formel (III) mit dem Rest R¹ nach Formel (V); und / oder mit einer Dicarbonsäure HOOC-R²-COOH zum Aldehyd der Formel (III), in diesem Falle ein Dialdehyd, mit dem Rest R¹ nach Formel (IV). Die Formeln (IV) und (V) und R¹, R² und R³ haben dabei die bereits beschriebene Bedeutung. Diese Veresterung kann ohne die Verwendung von Lösemitteln nach bekannten Methoden erfolgen, beschrieben beispielsweise in Houben-Weyl, "Methoden der organischen Chemie", Vol. VIII, Seiten 516 - 528.

Im Fall der Verwendung von Dicarbonsäuren wird ein Gemisch aus den Aldehyden der Formel (III) mit den Resten R¹ nach Formel (IV) und nach Formel (V) erhalten, wenn beispielsweise zuerst ein Teil der Carbonsäuregruppen mit 3-Hydroxypivalaldehyd verestert wird, und anschliessend die restlichen Carbonsäuregruppen mit einem Alkylalkohol (R³-OH) verestert werden. Ein solches Gemisch kann zur Herstellung des Polyaldimins direkt weiterverwendet werden.

Geeignete Carbonsäuren zur Veresterung mit 3-Hydroxypivalaldehyd sind sowohl kurzkettige als auch langkettige Carbonsäuren. Beispiele für geeignete kurzkettige Carbonsäuren sind Ameisensäure, Essigsäure, Propionsäure, Buttersäure, Isobuttersäure und 2-Ethylcapronsäure. Insbesondere geeignet sind langkettige Carbonsäuren wir beispielsweise: Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Bernsteinsäure, Glutarsäure, Adipinsäure, Pimelinsäure, Korksäure, Azelainsäure, Sebacinsäure, 1,12-Dodecandisäure, Maleinsäure, Fumarsäure, Hexahydrophthalsäure, Hexahydroisophthalsäure, Hexahydroterephthalsäure, 3,6,9-Trioxaundecandisäure und ähnliche Derivate von Polyethylenglykol, dehydrierte Ricinolsäuren, sowie Fettsäuren aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl.

Bevorzugt sind Laurinsäure, Myristinsäure, Palmitinsäure, Stearinsäure, Ölsäure, Linolsäure, Linolensäure, Bernsteinsäure, Adipinsäure, Azelainsäure und Sebacinsäure und technische Gemische von Fettsäuren, welche diese Säuren enthalten.

Durch die Umsetzung mindestens eines Polyamins mit aliphatischen primären Aminogruppen mit mindestens einem Aldehyd der Formel (III) entstehen beispielsweise Polyaldimine der schematischen Formeln (VI) und (VII), 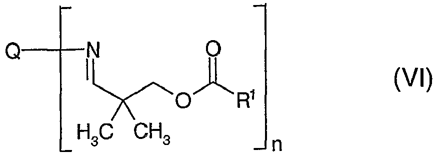 wobei n für 2, 3 oder 4 steht und Q den Rest eines Polyamins mit aliphatischen primären Aminogruppen nach Entfernung aller primären Aminogruppen darstellen soll; und 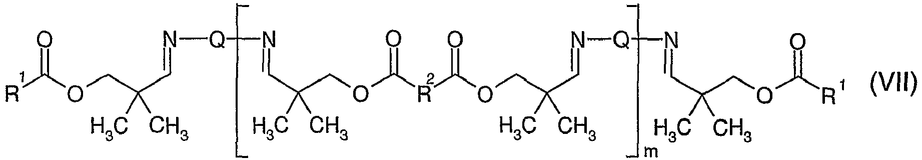 wobei m für eine ganze Zahl von 0 bis 10 steht und Q in demselben Molekül gleich oder verschieden ist und jeweils den Rest eines Polyamins mit aliphatischen primären Aminogruppen nach Entfernung aller primären Aminogruppen darstellen soll. Die Reste R¹ und R² in den Formeln (VI) und (VII) haben dabei die bereits beschriebene Bedeutung.

Wird ein Dialdehyd der Formel (III) mit dem Rest R¹ nach Formel (IV) für die Herstellung eines Polyaldimins verwendet, so wird dieser vorteilhaft entweder in einer Mischung mit einem Monoaldehyd der Formel (III) eingesetzt, und zwar in einem solchen Mengenverhältnis, dass für das Polyaldimin aus Formel (VII) für m im Mittel Werte im Bereich von 1 bis 10 erhalten werden; oder er wird so dosiert, dass ein Überschuss an Aldehydgruppen im Verhältnis zu den Aminogruppen bei der Herstellung des Polyaldimins vorhanden ist, wobei der Aldehyd-Überschuss so gewählt wird, dass für das Polyaldimin aus Formel (VII) für m ebenfalls im Mittel Werte im Bereich von 1 bis 10 erhalten werden. Auf beide Arten wird ein Gemisch oligomerer Polyaldimine mit einer gut handhabbaren Viskosität erhalten.

Als Polyaldimin können auch Mischungen verschiedener Polyaldimine verwendet werden, insbesondere auch Mischungen verschiedener Polyaldimine hergestellt mit Hilfe von verschiedenen Polyaminen mit primären aliphatischen Aminogruppen, umgesetzt mit verschiedenen oder gleichen Aldehyden der Formel (I), (II) oder (III). Es kann auch durchaus vorteilhaft sein, Mischungen von Polyaldiminen herzustellen, indem Mischungen von Polyaminen mit unterschiedlicher Anzahl primärer aliphatischer Aminogruppen eingesetzt werden.

Für die Herstellung des Polyaldimins wird der Aldehyd in Bezug auf die primären Aminogruppen des Polyamins stöchiometrisch oder in stöchiometrischem Überschuss eingesetzt.

Die erfindungsgemässe zweikomponentige Polyurethanzusammensetzung enthält in der ersten Komponente (A) mindestens ein Polyurethanprepolymer mit Isocyanatendgruppen, hergestellt aus mindestens einem aromatischen Polyisocyanat und mindestens einem Polyol.

Diese Umsetzung kann dadurch erfolgen, dass das Polyol und das Polyisocyanat mit üblichen Verfahren, beispielsweise bei Temperaturen von 50 °C bis 100°C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Der Überschuss an Polyisocyanat wird so gewählt, dass im resultierenden Polyurethanprepolymer nach der Umsetzung aller Hydroxylgruppen des Polyols ein Gehalt an freien Isocyanatgruppen von 0.1 bis 15 Gewichts-%, bevorzugt 0.5 bis 5 Gewichts-%, bezogen auf das gesamte Polyurethanprepolymer, verbleibt. Gegebenenfalls kann das Polyurethanprepolymer unter Mitverwendung von Lösemitteln oder Weichmachern hergestellt werden, wobei die verwendeten Lösemittel oder Weichmacher keine gegenüber Isocyanaten reaktive Gruppen enthalten.

Als Polyole für die Herstellung des Polyurethanprepolymers können beispielsweise die folgenden handelsüblichen Polyole oder beliebige Mischungen davon eingesetzt werden:
- Polyoxyalkylenpolyole, auch Polyetherpolyole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2-und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.

Besonders geeignet sind Polyoxyalkylendiole oder Polyoxyalkylentriole, insbesondere Polyoxypropylendiole oder Polyoxypropylentriole.

Speziell geeignet sind Polyoxyalkylendiole oder Polyoxyalkylentriole mit einem Ungesättigtheitsgrad tiefer als 0.02 mEq/g und mit einem Molekulargewicht im Bereich von 1000 bis 30'000 g/mol, sowie Polyoxypropylendiole und -triole mit einem Molekulargewicht von 400 bis 8'000 g/mol.

Ebenfalls besonders geeignet sind sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen. Unter 'Molekulargewicht' oder 'Molgewicht' versteht man im vorliegenden Dokument stets das Molekulargewichtsmittel Mₙ.
- Hydroxyfunktionelle Polybutadiene.
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.

Diese genannten Polyole weisen ein mittleres Molekulargewicht von 250 bis 30'000 g/mol und eine mittlere OH-Funktionalität im Bereich von 1.6 bis 3 auf.

Zusätzlich zu diesen genannten Polyolen können niedrigmolekulare zwei- oder mehrwertige Alkohole wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole und andere höherwertige Alkohole, niedrigmolekulare Alkoxylierungsprodukte der vorgenannten zwei- und mehrwertigen Alkohole sowie Mischungen der vorgenannten Alkohole bei der Herstellung des Polyurethanprepolymers mitverwendet werden.

Für die Herstellung des Polyurethanprepolymers werden handelsübliche aromatische Polyisocyanate verwendet. Als Beispiele seien die folgenden, in der Polyurethanchemie bestens bekannten Polyisocyanate erwähnt:
2,4- und 2,6-Toluylendiisocyanat (TDI) und beliebige Gemische dieser Isomeren, 4,4'-Diphenylmethandiisocyanat (MDI), die stellungsisomeren Diphenylmethandiisocyanate, 1,3- und 1,4-Phenylendiisocyanat, Oligomere und Polymere der vorgenannten Isocyanate, sowie beliebige Mischungen der vorgenannten Isocyanate. Besonders bevorzugt sind MDI und TDI.

Das Polyurethanprepolymer und das Polyaldimin werden miteinander vermengt, wobei das Polyaldimin in einer Menge von 0.1 bis 1.1 Equivalenten Aldimingruppen pro Equivalent Isocyanatgruppen des Polyurethanprepolymers dosiert wird. Zusätzlich kann ein Katalysator für die Hydrolyse des Polyaldimins zugegeben werden, beispielsweise eine organische Carbonsäure wie Benzoesäure oder Salicylsäure, ein organisches Carbonsäureanhydrid wie Phthalsäureanhydrid oder Hexahydrophthalsäureanhydrid, ein Silylester organischer Carbonsäuren, eine organische Sulfonsäure wie p-Toluolsulfonsäure oder 4-Dodecylbenzolsulfonsäure, oder eine andere organische oder anorganische Säure, oder Mischungen der vorgenannten Säuren.

Die erfindungsgemässe Zusammensetzung enthält eine zweite Komponente (B), die Wasser reversibel an ein Trägermaterial gebunden enthält. Es ist ein für die Erfindung wesentliches Merkmal, dass das Wasser nicht alleine eingesetzt werden kann. Es muss an ein Trägermaterial gebunden sein. Die Bindung muss allerdings reversibel sein, das heisst, das Wasser muss für die Reaktion mit dem Polyaldimin zugänglich sein.

Die Einmischung der zweiten Komponente **(B)** zur ersten Komponente **(A)** führt zu einer sofortigen Verfügbarkeit von Wasser in der gesamten Zusammensetzung, wodurch diese viel schneller aushärtet als eine einkomponentige Zusammensetzung. Da die saubere Aushärtung des isocyanathaltigen Polyurethans mit dem Polyaldimin unter Einfluss von Wasser durch eine stöchiometrische Überdosierung des Wassers in Bezug auf die Isocyanat- und Aldimingruppen nicht gestört wird, und da eine Unterdosierung des Wassers durch Nachhärtung via Luftfeuchtigkeit kompensiert werden kann, ist das Funktionieren des System wenig abhängig von der Einhaltung eines bestimmten Mischungsverhältnisses zwischen den beiden Komponenten **(A)** und **(B),** wie dies in einem konventionellen zweikomponentigen Polyurethansystem der Fall ist. Aus denselben Gründen muss die Vermischung der beiden Komponenten auch nicht ganz homogen erfolgen. Somit lässt sich das erfindungsgemässe zweikomponentige System wesentlich einfacher handhaben. Beispielsweise kann es mit Vorrichtungen appliziert werden, welche für konventionelle zweikomponentige Polyurethansysteme inadäquat wären.

Geeignete Trägermaterialien für die Komponente **(B)** können Hydrate oder Aquokomplexe sein, insbesondere anorganische Verbindungen, die Wasser in koordinativer Art oder als Kristallwasser gebunden haben. Beispiele für solche Hydrate sind Na₂SO₄·10H₂O, CaSO₄·2H₂O, CaSO₄·½H₂O, Na₂B₄O₇·10H₂O, MgSO₄·7H₂O.

Weitere geeignete Trägermaterialien beinhalten poröse Materialien, welche Wasser in Hohlräume einschliessen. Insbesondere handelt es sich hier um spezielle Silicate und Zeolithe. Besonders geeignet sind Kieselgur und Molekularsiebe. Die Grösse der Hohlräume ist dabei so zu wählen, dass sie für die Aufnahme von Wasser optimal sind. Deshalb zeigen sich Molekularsiebe mit der Porengrösse von 4 Ä als besonders geeignet.

Eine weitere Möglichkeit von geeigneten Trägermaterialien sind solche Trägermaterialien, die Wasser in nicht stöchiometrischen Mengen aufnehmen und eine pastöse Konsistenz haben oder Gels bilden. Die Trägermaterialien können anorganisch oder organisch sein. Beispiele hierfür sind Kieselgele, Tone, wie Montmorillonit, Bentonite, Hectorit, oder Polysaccharide, wie Zellulose und Stärke, oder Polyacrylsäuren, die auch unter dem Begriff "Super-Absorber" bekannt sind und beispielsweise in der Herstellung von Hygieneartikel zum Einsatz gebracht werden. Weiterhin sind ionische Gruppen tragende Trägermaterialien geeignet. Besonders bevorzugt als Trägermaterialien sind Polyurethanpolymere mit Carboxylgruppen oder Sulfonsäuregruppen als Seitenketten respektive deren Salze, insbesondere deren Ammoniumsalze. Diese Trägermaterialien können Wasser aufnehmen und binden, bis die Wasseraufnahme-Kapazität erschöpft ist.

Die besonders bevorzugten Polyurethanpolymere mit Carboxylgruppen oder Sulfonsäuregruppen respektive deren Salze als Seitenketten können beispielsweise aus Polyisocyanaten und Polyolen, welche Carbonsäure- oder Sulfonsäuregruppen enthalten, erhalten werden. Die Säuregruppen können anschliessend beispielsweise im ausreagierten Zustand mit Basen, insbesondere tertiären Aminen, neutralisiert werden. Die Eigenschaften des Trägermaterials sind stark abhängig von den verwendeten funktionellen Polyolen und Polyisocyanaten. Insbesondere ist auf die Hydrophilie beziehungsweise Hydrophobie der gewählten Isocyanate und Polyole zu achten. Es hat sich gezeigt, dass vor allem kurzkettige Polyole sehr geeignete Trägermaterialien ergeben.

Für die erfindungsgemässen Zusammensetzung ist es wichtig, dass die Menge des in der zweiten Komponente **(B)** vorhandenen Wassers die Aufnahmekapazität des Trägermaterials nicht überschreitet. Die zweite Komponente **(B)** muss stets, auch nach längerem Lagern, als homogenes Gel oder eine homogene Paste vorliegen und darf keine wesentlichen Mengen von flüssigem Wasser abscheiden.

Für schnelle Reaktionen sind diejenigen Trägermaterialien zu bevorzugen, die das gebundene Wasser rasch abgeben können. Aus diesem Grund sind vor allem organische Polymere mit ionischen Gruppen als Trägermaterialien sehr geeignet.

Die Freisetzung des Wassers erfolgt bevorzugt bei Raumtemperatur und tiefer. Es kann jedoch auch gewünscht sein, dass die Freisetzung erst bei höheren Temperaturen erfolgt. Die Freisetzungstemperatur kann durch die Wahl des Trägermaterials stark beeinflusst werden.

Das Verhältnis von eingesetzten Equivalenten Wasser zu eingesetzten Equivalenten Aldimingruppen beträgt vorzugsweise 0.5 bis 10.0, insbesondere 1.0 bis 5.0.

In den beschriebenen Polyurethanzusammensetzungen können zusätzlich unter anderem folgende, in der Polyurethanindustrie wohlbekannte Hilfs- und Zusatzmittel vorhanden sein:
Weichmacher, beispielsweise Ester organischer Carbonsäuren oder deren Anhydride, Phthalate, wie beispielsweise Dioctylphthalat oder Diisodecylphthalat, Adipate, wie zum Beispiel Dioctyladipat, Sebacate, organische Phosphor- und Sulfonsäureester, Polybutene und andere, mit Isocyanaten nicht reagierende Verbindungen; Reaktiwerdünner und Vernetzer, beispielsweise aliphatische Isocyanate wie beispielsweise 1,6-Hexamethylendiisocyanat, 2,2,4- und 2,4,4-Trimethyl-1,6-hexamethylendiisocyanat, 1,12-Dodecamethylendiisocyanat, Cyclohexan-1,3- und 1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat, 1,3- und 1,4-Tetramethylxylylendiisocyanat, Isocyanurate dieser Isocyanate, Oligomere und Polymere dieser Isocyanate sowie ihre Addukte mit Polyolen; Lösemittel; anorganische und organische Füllstoffe, wie zum Beispiel gemahlene oder gefällte Calciumcarbonate, welche gegebenenfalls mit Stearaten beschichtet sind, insbesondere feinteiliges beschichtetes Calciumcarbonat, Russe, Kaoline, Aluminiumoxide, Kieselsäuren und PVC-Pulver oder Hohlkugeln; Fasern, beispielsweise aus Polyethylen; Pigmente; Katalysatoren wie beispielsweise Organozinnverbindungen wie Dibutylzinndilaurat, Dibutylzinndichlorid, Dibutylzinndiacetylacetonat, Bismut-organische Verbindungen oder Bismut-Komplexe, oder amingruppenhaltige Verbindungen wie beispielsweise 2,2'-Dimorpholinodiethylether, oder andere, in der Polyurethanchemie übliche Katalysatoren für die Reaktion der Isocyanatgruppen; Rheologie-Modifizierer wie beispielsweise Verdickungsmittel, zum Beispiel Harnstoffverbindungen, Polyamidwachse, Bentonite oder pyrogene Kieselsäuren; Haftvermittler, insbesondere Silane wie Epoxysilane, Vinylsilane, Isocyanatosilane und mit Aldehyden zu Aldiminosilanen umgesetzte Aminosilane, sowie oligomere Formen dieser Silane; Trocknungsmittel wie beispielsweise p-Tosylisocyanat und andere reaktive Isocyanate, Orthoameisensäureester, Calciumoxid oder Molekularsiebe; Stabilisatoren gegen Wärme, Licht- und UV-Strahlung; flammhemmende Substanzen; oberflächenaktive Substanzen wie beispielsweise Netzmittel, Verlaufsmittel, Entlüftungsmittel oder Entschäumer; Fungizide oder das Pilzwachstum hemmende Substanzen; sowie weitere, in der Polyurethanindustrie üblicherweise eingesetzte Substanzen, wobei dem Fachmann klar ist, ob diese zusätzlichen Substanzen für beide oder nur für je eine der beiden Komponenten **(A)** und **(B)** geeignet sind.

Die erfindungsgemässe zweikomponentige Polyurethanzusammensetzung erlaubt insbesondere auch die Formulierung von weissen Zusammensetzungen, die schnell und ohne die Bildung von Blasen aushärten. Es ist bekannt, dass nach dem Stand der Technik formulierte weisse Systeme oft eine äusserst starke Blasenbildung zeigen.

Die Herstellung und Lagerung der zwei Komponenten, insbesondere der ersten Komponente **(A)** erfolgt unter Ausschluss von Feuchtigkeit. Die beiden Komponenten sind getrennt voneinander lagerstabil, d.h. sie können in einer geeigneten Verpackung oder Anordnung, wie beispielsweise in einem Fass, einem Beutel oder einer Kartusche, vor ihrer Anwendung während mehreren Monaten bis zu einem Jahr und länger aufbewahrt werden, ohne dass sie ihre Anwendbarkeit verlieren. In einer Ausführungsform kann die zweite Komponente **(B)** in einem wie weiter unten beschriebenen Behälter, der in einem Dosieraufsatz integriert ist, aufbewahrt werden.

Es ist auch möglich, dass die zwei Komponenten in miteinander über Trennwände getrennte Behältern abgefüllt und gelagert werden. Beispiele für solche Behälter sind Koaxial-Kartuschen oder Zwillingskartuschen.

Beim Mischen der beiden Komponenten **(A)** und **(B)** hydrolysiert das Polyaldimin zu einem Aldehyd und einem Polyamin, worauf letzteres mit dem isocyanatgruppenhaltigen Polyurethanprepolymer reagiert und dieses somit, zumindest partiell, aushärtet.

Das Mischen der beiden Komponenten **(A)** und **(B)** erfolgt vorteilhaft kontinuierlich während der Applikation. In einer bevorzugten Ausführungsform erfolgt das Mischen der beiden Komponenten **(A)** und **(B)** mittels eines zwei ineinander greifende Dosierrotoren enthaltenden Dosieraufsatzes. Solche bevorzugten Dosieraufsätze sind im Detail in der Patentschrift EP 0 749 530 beschrieben. Der Dosieraufsatz wird vorzugsweise für kleinere Anwendungen auf eine handelsübliche Kartusche aufgesetzt, welche die erste Komponente **(A)** enthält, während die zweite Komponente **(B)** sich in einem Behälter befindet, welcher im Dosieraufsatz integriert ist. Die Dosierung und Mischung erfolgt bei der Applikation in diesem Dosieraufsatz, welcher passiv durch die Druckaufbeschlagung der Kartusche, beispielsweise mittels einer handelsüblichen Kartuschenpresse, betrieben wird.
Für eine bessere Durchmischung kann zusätzlich ein Statikmischer an der Austrittsöffnung dieses Dosieraufsatzes angebracht werden.

Für industrielle Anwendungen hingegen kommt vorteilhaft eine Förderung der beiden Komponenten **(A)** und **(B)** aus Fässern oder Hobbock-Behältern zum Einsatz. Hierbei werden die beiden Komponenten **(A)** und **(B)** vorteilhaft mit einem Dosieraufsatz vermischt, welcher sich im Wesentlichen dadurch vom oben beschriebenen Dosieraufsatz unterscheidet, dass er über einen Schlauchanschluss für die zweite Komponente **(B)** verfügt.

In einer Ausführungsform erfolgt die Vermischung der beiden Komponenten **(A)** und **(B)** der Polyurethanzusammensetzung im wesentlichen homogen.

In einer anderen Ausführungsform erfolgt die Vermischung der beiden Komponenten **(A)** und **(B)** der Polyurethanzusammensetzung im wesentlichen schichtenartig.

Eine typische Applikation erfolgt, indem zuerst die beiden Komponenten **(A)** und **(B)** der Polyurethanzusammensetzung wie beschrieben vermischt werden und anschliessend die vermischte Polyurethanzusammen-setzung mit mindestens einer Festkörperoberfläche kontaktiert wird und aushärtet. Die Kontaktierung der Festkörperoberfläche erfolgt typischerweise als Auftrag einer Raupe auf die Oberfläche.

Die Vernetzung startet unmittelbar nach dem Mischen der beiden Komponenten **(A)** und **(B).** Zusätzliches Wasser, welches die Härtung beeinflussen kann, kann nach der Applikation aus der Umgebung, beispielsweise als Luftfeuchtigkeit, in die applizierte Polyurethanzusammen-setzung eindringen.

Wird das Polyaldimin im Unterschuss eingesetzt, d.h. das Verhältnis der Aldimingruppen zu den Isocyanatgruppen unterstöchiometrisch gewählt, so reagieren die überschüssigen Isocyanatgruppen mit dem vorhandenen Wasser aus der zweiten Komponente **(B)** oder mit Luftfeuchtigkeit.

Die Reaktion des isocyanatgruppenhaltigen Polyurethanprepolymers mit dem hydrolysierenden Polyaldimin muss nicht notwendigerweise über das Polyamin erfolgen. Selbstverständlich sind auch Reaktionen mit Zwischenstufen der Hydrolyse des Polyaldimins zum Polyamin möglich. Beispielsweise ist es denkbar, dass das hydrolysierende Polyaldimin in der Form eines Halbaminals direkt mit dem isocyanatgruppenhaltigen Polyurethanprepolymer reagiert.

Als Folge der oben beschriebenen Reaktionen härtet die Polyurethanzusammensetzung aus.

Die beschriebene Polyurethanzusammensetzung zeichnet sich durch eine hervorragende Frühfestigkeit und rasche, blasenfreie Durchhärtung aus und weist eine äusserst gute Haftung auf diversen Festkörperoberflächen auf, was aufgrund der sehr schnellen Aushärtung durchaus keine Selbstverständlichkeit darstellt, da schnell aushärtende Polyurethanzusammen-setzungen erfahrungsgemäss zu Schwächen im Haftungsaufbau neigen. Die beschriebene Polyurethanzusammensetzung verfügt überdies im ausgehärteten Zustand über ausgezeichnete mechanische Eigenschaften. Diese sind vergleichbar mit den mechanischen Eigenschaften einer entsprechenden einkomponentigen Polyurethanzusammensetzung, welche allein durch Luftfeuchtigkeit langsam ausgehärtet wird. Die ausgehärtete zweikomponentige Polyurethanzusammensetzung verfügt über eine hohe Dehnung und eine hohe Zugfestigkeit, bei Elastizitätsmodulen, welche sich durch Variation der eingesetzten Komponenten wie beispielsweise der Polyole, Polyisocyanate und Polyamine in einem weiten Bereich an die Bedürfnisse der jeweiligen Applikation angepasst einstellen lassen.

In einer bevorzugten Ausführungsform zeichnen sich die Aldehyde, welche von Polyaldimin bei dessen Hydrolyse abgespalten werden, dadurch aus, dass sie aufgrund ihres hohen Dampfdruckes in der ausgehärteten Polyurethanzusammensetzung verbleiben, und dass sie dabei keinerlei störenden Geruch verursachen. Im Fall der Verwendung von langkettigen Fettsäuren bewirkt der hydrophobe Fettsäurerest eine geringere Wasseraufnahme der ausgehärteten Polyurethanzusammensetzung, was die Beständigkeit des Polyurethanmaterials gegenüber Hydrolyse erhöht. Zudem bietet ein hydrophober Fettsäurerest bei längerdauerndem Wasserkontakt einen guten Schutz gegen das Auswaschen der Aldehyde aus der ausgehärteten Polyurethanzusammensetzung. Dieses Polyurethansysteme weisen zudem eine gute Lichtstabilität auf.

Die beschriebene Polyurethanzusammensetzung ist geeignet als Dichtstoff aller Art, beispielsweise zum Abdichten von Fugen im Bau, als Klebstoff für das Verkleben von diversen Substraten, beispielsweise zum Verkleben von Bauteilen bei der Herstellung von Automobilen, Schienenfahrzeugen, Schiffen oder anderen industriellen Gütern, sowie als Beschichtung oder Belag für diverse Artikel beziehungsweise variable Festkörperoberflächen.

Als Beschichtungen bevorzugt sind Schutzanstriche, Versiegelungen, Schutzbeschichtungen und Primer-Beschichtungen. Unter den Belägen sind besonders Bodenbeläge als bevorzugt zu nennen. Solche Beläge werden hergestellt, indem typischerweise eine reaktive Zusammensetzung auf den Untergrund gegossen und egalisiert wird, wo sie zu einem Bodenbelag aushärtet. Beispielsweise werden solche Bodenbeläge für Büros, Wohnbereiche, Spitäler, Schulen, Lagerhallen, Parkgaragen und andere private oder industrielle Anwendungen verwendet. Diese Anwendungen sind grossflächig, was selbst bei Anwendungen im Aussenbereich zu arbeitshygienischen Schwierigkeiten und / oder Geruchsbelästigungen führen kann. Weiterhin wird ein Grossteil der Fussbodenbeläge im Innenbereich appliziert. Deshalb stellt der Geruch bei Bodenbelägen generell ein grosses Problem dar.

Die Polyurethanzusammensetzung wird mit der Oberfläche eines beliebigen Untergrundes zumindest partiell kontaktiert. Bevorzugt ist eine gleichmässige Kontaktierung in Form eines Dicht- oder Klebstoffes, einer Beschichtung oder eines Belages, und zwar in den Bereichen, welche für den Einsatz eine Verbindung in Form einer Verklebung oder Dichtung benötigen oder aber deren Untergrund abgedeckt sein soll. Es kann durchaus nötig sein, dass der Untergrund bzw. der zu kontaktierende Artikel im Vorfeld des Kontaktierens einer physikalischen und / oder chemischen Vorbehandlung unterzogen werden muss, beispielsweise durch Schleifen, Sandstrahlen, Bürsten oder dergleichen, oder durch Behandeln mit Reinigern, Lösemitteln, Haftvermittlern, Haftvermittlerlösungen oder Primern, oder dem Aufbringen einer Haftbrücke oder eines Sealers.

### Beispiele

### Verwendete Polyole:

Acclaim^{®} 4200 N (Bayer): Lineares Polypropylenoxid-Polyol mit theoretischer OH-Funktionalität 2, mittlerem Molekulargewicht ca. 4000, OH-Zahl ca. 28 mg KOH/g, Ungesättigtheitsgrad ca. 0.005 mEq/g.

Caradol^{®} MD34-02 (Shell): Nichtlineares Polypropylenoxidpolyethylenoxid-Polyol, Ethylenoxid-terminiert, mit theoretischer OH-Funktionalität 3, mittlerem Molekulargewicht ca. 4900, OH-Zahl ca. 35 mg KOH/g, Ungesättigtheitsgrad ca. 0.08 mEq/g.

Caradol^{®} ED56-11 (Shell): Lineares Polypropylenoxid-Polyol mit theoretischer OH-Funktionalität 2, mittlerem Molekulargewicht ca. 2000, OH-Zahl ca. 56 mg KOH/g.

### Herstellung der Polyaldimine:

### Polyaldimin A1

In einem Rundkolben wurden 62.0 g α,ω-Polyoxypropylendiamin (Jeffamine^{®} D-230, Huntsman; Amin-Gehalt = 8.22 mmol NH₂/g) vorgelegt. Unter guter Kühlung und kräftigem Rühren wurden aus einem Eintropftrichter 89.5 g 2,2-Dimethyl-3-isobutyroxy-propanal zugegeben. Nach 10 Minuten Rühren wurden die flüchtigen Bestandteile abdestilliert. Das so erhaltene, bei Raumtemperatur flüssige Reaktionsprodukt wies einen Aldimin-Gehalt, bestimmt als Amin-Gehalt, von 3.58 mmol NH₂/g auf.

### Polyaldimin A2

In einem Rundkolben wurden 100.0 g α,ω-Polyoxypropylendiamin (Jeffamine^{®} D-230, Huntsman; Amin-Gehalt = 8.22 mmol NH₂/g) vorgelegt. Unter guter Kühlung und kräftigem Rühren wurden aus einem Eintropftrichter 75.0 g Isobutyraldehyd zugegeben. Nach 12 Stunden Rühren wurden die flüchtigen Bestandteile abdestilliert. Das so erhaltene, bei Raumtemperatur flüssige Reaktionsprodukt wies einen Aldimin-Gehalt, bestimmt als Amin-Gehalt, von 5.66 mmol NH₂/g auf.

### Polyaldimin A3

In einen Rundkolben mit Rückflusskühler und Wasserabscheider (Dean Stark) wurden 40.5 g Formaldehyd (37% in Wasser, methanolfrei), 36.0 g Isobutyraldehyd, 100.0 g Laurinsäure und 1.0 g 4-Toluolsulfonsäure eingewogen und unter Stickstoffatmosphäre gestellt. Die Mischung wurde im Ölbad unter kräftigem Rühren erwärmt, worauf sich Wasser abzuscheiden begann. Nach vier Stunden wurde die Apparatur im Wasserstrahlvakuum evakuiert. Es sammelten sich insgesamt rund 35 mL Destillat im Abscheider. Das Reaktionsgemisch wurde abgekühlt, und aus einem Eintropftrichter wurden 48.6 g α,ω-Polyoxypropylendiamin (Jeffamine^{®} D-230, Huntsman; Amin-Gehalt = 8.22 mmol NH₂/g) zugegeben. Danach wurden die flüchtigen Bestandteile vollständig abdestilliert. Das so erhaltene, bei Raumtemperatur flüssige Reaktionsprodukt wies einen Aldimin-Gehalt, bestimmt als Amin-Gehalt, von 2.17 mmol NH₂/g auf.

### Polyaldimin A4

In einem Rundkolben wurden 100.0 α,ω-Polyoxypropylendiamin (Jeffamine^{®} D-230, Huntsman; Amin-Gehalt = 8.22 mmol NH₂/g) vorgelegt. Unter guter Kühlung und kräftigem Rühren wurden tropfenweise 91.0 g Benzaldehyd zugegeben. Nach erfolgter Zugabe wurde noch 10 Minuten bei Raumtemperatur gerührt, dann das Wasser im Wasserstrahlvakuum vollständig abdestilliert. Das so erhaltene flüssige Reaktionsprodukt wies einen Aldimin-Gehalt, bestimmt als Amin-Gehalt, von 4.65 mmol NH₂/g auf.

### Polyaldimin A5

In einem Rundkolben wurden 50.0 1,5-Diamino-2-methylpentan (MPMD, DuPont; Amin-Gehalt = 17.11 mmol NH₂/g) vorgelegt. Unter guter Kühlung und kräftigem Rühren wurden tropfenweise 76.0 g 2,2-Dimethylpropanal zugegeben. Nach erfolgter Zugabe wurde noch 10 Minuten bei Raumtemperatur gerührt, dann das Wasser im Wasserstrahlvakuum vollständig abdestilliert. Das so erhaltene Reaktionsprodukt wies einen Aldimin-Gehalt, bestimmt als Amin-Gehalt, von 7.86 mmol NH₂/g auf.

### Herstellung der wasserhaltigen Komponente (B)

Ein ionische Gruppen enthaltendes organisches Polymer mit einem mittlerem Molekulargewicht von ca. 20'000 wurde durch Polyaddition von Isophorondiisocyanat (IPDI; Vestanat^{®} IPDI, Degussa) mit Polyol Caradol^{®} ED56-11 (Shell), Aminoethylethanolamin und 2,2-Bis-(hydroxymethyl)-propionsäure in N-Methylpyrrolidon, anschliessender Neutralisation mit Triethylamin und Zugabe von Wasser bis zu einem Wassergehalt von 25 Gewichts-% hergestellt. Es wurde eine homogene Paste erhalten, die auch nach längerem Lagern unverändert blieb und kein Wasser abschied.

Die so hergestellte Paste wurde als zweite Komponente **(B)** für alle der im folgenden beschriebenen Beispiele 1 bis 15 verwendet.

### Beispiele 1 bis 7

Beispiele 1 bis 7 belegen die Herstellung von erfindungsgemässen zweikomponentigen Polyurethanzusammensetzungen und ihre Verwendung als Klebstoffe.

### a) Herstellung der ersten Komponente (A):

In einem Vakuummischer wurden 2500 g Prepolymer 1, 1000 g Prepolymer 2, 3500 g Kaolin, 2540 g Harnstoff-Verdickungsmittel, 50 g 3-Glycidoxypropyltrimethoxysilan (Silquest^{®} A-187, OSi Crompton) und 10 g Benzoesäure unter Feuchtigkeitsausschluss zu einer knollenfreien, homogenen Paste verarbeitet.

Die Prepolymere 1 und 2 wurden wie folgt hergestellt:
Prepolymer 1: 1295 g Polyol Acclaim^{®} 4200 N (Bayer), 2585 g Polyol Caradol^{®} MD34-02 (Shell), 620 g 4,4'-Methylendiphenyldiisocyanat (MDI; Desmodur^{®} 44 MC L, Bayer) und 500 g Diisodecylphthalat (DIDP; Palatinol^{®} Z, BASF) wurden nach bekanntem Verfahren bei 80°C zu einem NCO-terminierten Polyurethanprepolymeren umgesetzt. Das Reaktionsprodukt hatte einen titrimetrisch bestimmten Gehalt an freien Isocyanat-Gruppen von 2.03 Gewichts-%.
Prepolymer 2: 1230 g Polyol Acclaim^{®} 4200 N (Bayer), 615 g Polyol Caradol^{®} MD34-02 (Shell) und 155 g Toluylendiisocyanat (TDI; Desmodur^{®} T-80 P L, Bayer; 80:20-Mischung des 2,4- und des 2,6-Isomeren) wurden nach bekanntem Verfahren bei 80°C zu einem NCO-terminierten Prepolymeren umgesetzt. Das Reaktionsprodukt hatte einen titrimetrisch bestimmten Gehalt an freien Isocyanat-Gruppen von 1.54 Gewichts-%.

Das Harnstoff-Verdickungsmittel wurde wie folgt hergestellt:
In einem Vakuummischer wurden 3000 g Diisodecylphthalat (DIDP; Palatinol^{®} Z, BASF) und 480 g 4,4'-Methylendiphenyldiisocyanat (MDI; Desmodur^{®} 44 MC L, Bayer) vorgelegt und leicht aufgewärmt. Dann wurden unter starkem Rühren 270 g Monobutylamin langsam zugetropft. Die entstehende Paste wurde unter Vakuum und Kühlung eine Stunde weitergerührt.

Für die Herstellung der ersten Komponenten **(A)** jedes der Beispiele 1 bis 7 wurden anschliessend je 1000 g dieser Paste mit der in Tabelle 1 für das jeweilige Beispiel aufgeführten Menge Polyaldimin 1 versetzt (jeweils dem angegebenen Verhältnis NH₂ / NCO entsprechend) und dieses unter Vakuum homogen eingemischt.

| Tabelle 1: Menge Polyaldimin 1 und Verhältnis NH₂ / NCO in den ersten Komponenten **(A)** der Beispiele 1 bis 7. | | |
|---|---|---|
| | g Polyaldimin 1 / 1000 g Paste | Verhältnis NH₂ / NCO |
| Beispiel 1 **(A)** | 13.9 | 0.3 |
| Beispiel 2 **(A)** | 18.5 | 0.4 |
| Beispiel 3 **(A)** | 23.1 | 0.5 |
| Beispiel 4 **(A)** | 27.8 | 0.6 |
| Beispiel 5 **(A)** | 32.4 | 0.7 |
| Beispiel 6 **(A)** | 37.0 | 0.8 |
| Beispiel 7 **(A)** | 41.7 | 0.9 |

Die so erhaltenen ersten Komponenten **(A)** der Beispiele 1 bis 7 wurden unmittelbar nach ihrer Herstellung in Aluminium-Kartuschen mit einem Durchmesser von 45 mm abgefüllt, diese luftdicht verschlossen und im Ofen bei 60 °C gelagert.

### b) Prüfung der ersten Komponente (A):

Nach einem Tag wurden die ersten Komponenten **(A)** auf Auspresskraft, Hautbildungszeit und Durchhärtungsgeschwindigkeit geprüft; nach 7 Tagen wurde die Auspresskraft der ersten Komponenten **(A)** erneut gemessen.

Die Auspresskraft (APK) der ersten Komponenten **(A)** wurde an jeweils einer frisch geöffneten, raumtemperaturwarmen Kartusche ermittelt, wobei die Polyurethanzusammensetzung an der Kartuschenspitze bei 23°C ohne Zumischung einer wasserhaltigen Komponente durch eine Öffnung von 5 mm gepresst wurde. Das Auspressen erfolgte durch eine Zugprüfmaschine mit einer konstanten Geschwindigkeit von 60 mm/min. Die Veränderung der Auspresskraft ist ein Mass für die Lagerstabilität einer Polyurethanzusammensetzung.

Die Hautbildungszeit wurde bestimmt, indem die Raumtemperaturwarmen ersten Komponenten **(A)** bei 23 °C und 50% relativer Luftfeuchtigkeit ohne Zumischung einer wasserhaltigen Komponente in einer Schichtdicke von 3 mm auf Pappkarton aufgetragen und dann die Zeit bestimmt wurde, die es dauerte, bis die aufgetragene Schicht beim leichten Antippen ihrer Oberfläche mittels einer Pipette aus LDPE keine Rückstände auf der Pipette mehr zurückliess.

Die Aushärtungsgeschwindigkeit der ersten Komponenten **(A)** wurde bestimmt bei 23°C und 50% relativer Luftfeuchtigkeit auf PTFE-Untergrund.

Die Ergebnisse der vorgenommenen Prüfungen sind in der Tabelle 2 aufgeführt.

| Tabelle 2: Auspresskraft, Hautbildungszeit und Aushärtungsgeschwindigkeit der ersten Komponenten **(A)** der Beispiele 1 bis 7. | | | | |
|---|---|---|---|---|
| | APK frisch¹ (N) | APK gelagert² (N) | Hautbildungszeit (Min.) | Aushärtungsgeschwindigkeit (mm/Tag) |
| (Ref.)³ | 621 | 820 | 180 | 3.0 |
| Beispiel 1 **(A)** | 612 | 801 | 60 | 3.2 |
| Beispiel 2 **(A)** | 595 | 788 | 50 | 3.3 |
| Beispiel 3 **(A)** | 586 | 786 | 42 | 3.5 |
| Beispiel 4 **(A)** | 586 | 774 | 35 | 3.4 |
| Beispiel 5 **(A)** | 572 | 757 | 31 | 3.4 |
| Beispiel 6 **(A)** | 550 | 734 | 28 | 3.2 |
| Beispiel 7 **(A)** | 534 | 731 | 26 | 3.2 |

| | | | | |
|---|---|---|---|---|
| ¹ Auspresskraft nach einem Tag Lagerung bei 60 °C. ² Auspresskraft, nach 7 Tagen Lagerung bei 60 °C. ³ (Ref.)=Referenzwert: Gleiche erste Komponente **(A)** wie für Beispiel 1 bis 7, aber ohne Einmischung von Polyaldimin 1 und Benzoesäure. | | | | |

Die Ergebnisse in Tabelle 2 zeigen, dass die ersten Komponenten **(A)** der Beispiele 1 bis 7 unter Ausschluss von Feuchtigkeit über eine ausgezeichnete Lagerstabilität verfügen (gleich gut oder besser als der nicht-Polyaldimin-haltige Referenzklebstoff) sowie auch ohne Zumischung einer wasserhaltigen zweiten Komponente **(B)** aushärten.

### c) Herstellung der erfindungsgemässen zweikomponentigen Polyurethanzusammensetzungen:

Nach einem Tag Lagerung im Ofen bei 60 °C wurden die ersten Komponenten **(A)** auf 80 °C erwärmt und unter Beimischung der Raumtemperatur-warmen zweiten Komponente **(B)** appliziert.

Das Mischen der beiden Komponenten **(A)** und **(B)** erfolgte kontinuierlich während der Applikation mittels eines Dosierausatzes des Typs Sika® Boosters (erhältlich bei Sika Schweiz AG), bei dem die im integrierten Behälter vorhandene Substanz durch die zweite Komponente **(B)** ersetzt worden war. Der so modifizierte Sika® Booster wurde auf eine die erste Komponente **(A)** des jeweiligen Beispiels enthaltende Kartusche aufgesetzt und passiv durch die Druckaufbeschlagung der Kartusche mittels einer handelsüblichen Kartuschenpresse betrieben. Auf die Austrittsöffnung des modifizierten Sika® Boosters wurde ein Statikmischer, mit einem Durchmesser von 16 mm und 6 Mischelementen, entsprechend einem Mischweg von 70 mm, aufgeschraubt. Durch diese Mischvorrichtung erfolgte die Vermischung der beiden Komponenten **(A)** und **(B)** der zweikomponentigen Polyurethanzusammensetzung im wesentlichen schichtenartig. Die Dosierung der zweiten Komponente **(B)** betrug 2 Gewichts-%, bezogen auf die erste Komponente **(A).**

### d) Prüfung der erfindungsgemässen zweikomponentigen Polyurethanzusammensetzungen als Klebstoffe:

Die erfindungsgemässen zweikomponentigen Polyurethanzusammensetzungen wurden unmittelbar nach ihrer Herstellung auf Offenzeit, Frühfestigkeit und Blasenbildung, auf mechanische Eigenschaften nach der Aushärtung, sowie auf Haftungseigenschaften geprüft.

Zur Bestimmung der Offenzeit, d.h. der maximal möglichen Zeit, in der der Klebstoff nach seiner Applikation noch bearbeitet - etwa durch Verstreichen oder Andrücken einer zu verklebenden Festkörperoberfläche oder eines Artikels - werden kann, wurde der Klebstoff in Form einer Dreiecksraupe von ca. 1 cm Querschnitt auf eine LDPE-Folie aufgetragen und dann die Raupe in regelmässigen zeitlichen Abständen mit je einem Glasplättchen, das vor Gebrauch mit Sika^{®} Aktivator (erhältlich bei Sika Schweiz AG) vorbehandelt und während 10 Minuten abgelüftet wurde, belegt, das Glasplättchen unverzüglich auf eine Klebe-Dicke von ca. 5 mm eingepresst und mit der zwischen Raupenapplikation und Einpressen des Plättchens vergangenen Zeit beschriftet. Nach der Aushärtung während einem Tag bei 23 °C und 50% relativer Luftfeuchtigkeit wurde die Haftung zwischen Klebstoff und Glas, durch Abziehen der Klebstoffschicht wie weiter unten beschrieben, bestimmt. Das letzte der Glasplättchen, das noch ein vollständig kohäsives Haftungsbild zeigte, gab dann die Offenzeit an.

Die Frühfestigkeit wurde wie folgt bestimmt. Zuerst wurden zwei Glasplättchen der Dimension 40 x 100 x 6 mm auf der zu verklebenden Seite mit Sika^{®} Aktivator (erhältlich bei Sika Schweiz AG) vorbehandelt. Nach einer Ablüftezeit von 10 Minuten wurde der Klebstoff als Dreiecksraupe entlang der Längskante auf einem der Glasplättchen aufgetragen. Nach ca. einer Minute wurde der applizierte Klebstoff unter Verwendung des zweiten Glasplättchens mittels einer Zugmaschine (Zwick) auf 5 mm Kleb-Dicke verpresst (entsprechend einer Verklebungsbreite von ca. 1 cm), dann bei 23 °C und 50% relativer Luftfeuchtigkeit gelagert. Jeweils nach 60, 120 und 240 Minuten wurden pro Ansatz je drei der verklebten Glasplättchen mit einer Zuggeschwindigkeit von 200 mm/min auseinandergezogen, die maximale Kraft hierfür in N/cm Raupenlänge registriert und über die drei Proben gemittelt.

Die Blasenbildung wurde folgendermassen bestimmt. Der Klebstoff wurde als Dreiecksraupe von ca. 1 cm Durchmesser auf ein Glasplättchen, das vor Gebrauch mit Sika^{®} Aktivator (erhältlich bei Sika Schweiz AG) vorbehandelt und während 10 Minuten abgelüftet wurde, aufgetragen, die Dreiecksraupe die Raupe mit einem LDPE-Streifen belegt und diesen auf 5 mm Klebstoff-Dicke eingedrückt. Nach Aushärtung des Klebstoffs während einem Tag bei 23 °C und 50% relativer Luftfeuchtigkeit wurde der Klebstoff aufgeschnitten und qualitativ anhand der Menge der von Auge sichtbaren Blasen, sowohl im Klebstoff als auch in der Klebefläche zwischen Glas und Klebstoff, beurteilt.

Die Ergebnisse der vorgenommenen Prüfungen sind in der Tabelle 3 aufgeführt.

| Tabelle 3: Offenzeit, Frühfestigkeit und Blasenbildung der erfindungsgemässen zweikomponentigen Polyurethanzusammensetzungen der Beispiele 1 bis 7. | | | | | |
|---|---|---|---|---|---|
| | Offenzeit (Min.) | Frühfestigkeit (N/cm) | | | Blasen-bildung |
| | | nach 60 Min. | nach 120 Min. | nach 240 Min. | |
| (Ref.)⁴ | >30 | 1.8 | 2.2 | 7.1 | keine |
| Beispiel 1 | 28 | 3.6 | 5.8 | 14.8 | keine |
| Beispiel 2 | 24 | 7.3 | 13.6 | 25.7 | keine |
| Beispiel 3 | 22 | 10.7 | 32.4 | 70.9 | keine |
| Beispiel 4 | 22 | 23.0 | 70.2 | 152.0 | keine |
| Beispiel 5 | 20 | 30.9 | 83.6 | 166.0 | keine |
| Beispiel 6 | 20 | 30.5 | 85.3 | 169.3 | keine |
| Beispiel 7 | 18 | 30.2 | 85.8 | 169.7 | keine |

| | | | | | |
|---|---|---|---|---|---|
| ⁴ (Ref.)=Referenzwert: Gleicher Klebstoff wie für Beispiel 1 bis 7, aber erste Komponente **(A)** ohne Polyaldimin 1 und Benzoesäure. | | | | | |

Die Ergebnisse in Tabelle 3 zeigen, dass die erfindungsgemässen zweikomponentigen Polyurethanzusammensetzungen der Beispiele 1 bis 7, im Gegensatz zum nicht Polyaldimin-haltigen Referenzklebstoff, über gute bis hervorragende Frühfestigkeitswerte, nach einer bis 4 Stunden nach ihrer Applikation, verfügen. Besonders ausgeprägt ist dies für die Beispiele 3 bis 7, insbesondere 4 bis 7 (Verhältnis NH₂ / NCO = 0.6 bis 0.9), welche nach 4 Stunden Frühfestigkeitswerte aufweisen, die nahe an die Werte für die Festigkeit nach vollständiger Aushärtung herankommen. Der schnelle Festigkeitsaufbau geht dabei nicht zulasten der Offenzeit, die für alle Beispiele ausreichend lange ist für eine praktikable Verarbeitung. Ebenso kommt es trotz sehr schneller Härtungsreaktion nicht zur Bildung von störenden Gasblasen, wie sie sonst in schnellen feuchtigkeitshärtenden Polyurethanzusammen-setzungen oft auftreten und dort häufig zu Einbussen in den mechanischen Eigenschaften und in der Haftung führen.

Die mechanischen Eigenschaften der Klebstoffe wurden bestimmt, indem der Klebstoff als Film von ca. 2 mm Dicke auf PTFE-Unterlage aufgetragen wurde, der Film während 7 Tagen bei 23°C und 50% relativer Luftfeuchtigkeit ausgehärtet wurde und dann gemäss DIN EN 53504 auf Zugfestigkeit, Bruchdehnung und E-Modul bei 0.5 bis 5% Dehnung geprüft wurde (Zuggeschwindigkeit: 200 mm/min).

Die Ergebnisse der vorgenommenen Prüfungen sind in der Tabelle 4 aufgeführt.

| Tabelle 4: Mechanische Eigenschaften der erfindungsgemässen zweikomponentigen Polyurethanzusammensetzungen der Beispiele 1 bis 7. | | | | |
|---|---|---|---|---|
| | Zugfestigkeit (MPa) | E-Modul (MPa) | Zugscherfestigkeit (MPa) | Bruchdehnung (%) |
| (Ref.)⁵ | 4.6 | 3.7 | 2.2 | 220 |
| Beispiel 1 | 4.5 | 3.4 | 2.7 | 250 |
| Beispiel 2 | 4.3 | 3.4 | 3.0 | 230 |
| Beispiel 3 | 4.6 | 3.6 | 3.1 | 250 |
| Beispiel 4 | 4.5 | 3.3 | 3.2 | 250 |
| Beispiel 5 | 4.5 | 3.3 | 3.0 | 250 |
| Beispiel 6 | 4.5 | 3.3 | 3.5 | 280 |
| Beispiel 7 | 4.5 | 3.4 | 3.6 | 260 |

| | | | | |
|---|---|---|---|---|
| ⁵ (Ref.)=Referenzwert: Gleicher Klebstoff wie für Beispiel 1 bis 7, aber erste Komponente **(A)** ohne Polyaldimin 1 und Benzoesäure. | | | | |

Die Ergebnisse in Tabelle 4 zeigen, dass die erfindungsgemässen zweikomponentigen Polyurethanzusammensetzungen der Beispiele 1 bis 7 nach vollständiger Aushärtung über sehr gute Werte für die mechanischen Eigenschaften verfügen. Die Werte unterscheiden sich dabei für alle Beispiele, unabhängig vom gewählten Verhältnis NH₂ / NCO, nur geringfügig von jenen für den nicht Polyaldimin-haltigen Referenzklebstoff; insbesondere tritt kein unerwünschter Anstieg der Werte für das E-Modul auf.

Für die Haftungsversuche wurde die jeweilige Festkörperoberfläche mit Isopropanol vorgereinigt (Acrylatdecklack, Autocryl Pluss weiss, Akzo Nobel) bzw. mit Schleifwolle angeschliffen (Aluminium roh, AIMgSi1, Firma Rocholl, Schönbrunn, Deutschland; schmelztauchverzinkter Stahl, roh, feuerverzinkt ST 02 Z 275-NA, Rocholl), mit Sika^{®} Aktivator (erhältlich bei Sika Schweiz AG) vorbehandelt und dann, nach 10 Minuten Ablüftezeit, der Klebstoff als Dreiecksraupe von ca. 1 cm Durchmesser appliziert, die Raupe mit einem LDPE-Streifen belegt und diesen leicht angedrückt. Nach 7 Tagen bei Lagerung bei 23°C und 50% relativer Luftfeuchtigkeit (in Tabelle 5 als "RT" angegeben) und weiteren 7 Tagen bei 70°C und 100% relativer Luftfeuchtigkeit (in Tabelle 5 als "KK" (Kondenswasserklima) angegeben) wurde die Haftung mittels "Raupentest" getestet. Hierbei wird am Ende knapp über der Klebefläche eingeschnitten. Das eingeschnittene Ende der Raupe wird mit einer Rundzange festgehalten und von der Oberfläche gezogen. Dies geschieht durch vorsichtiges Aufrollen der Raupe auf die Zangenspitze, sowie Plazieren eines Schnittes senkrecht zur Raupenziehrichtung bis auf die blanke Oberfläche. Die Raupenabziehgeschwindigkeit ist so zu wählen, dass ca. alle 3 Sekunden ein Schnitt gemacht werden muss (Schnittabstand ca. 2 bis 3 mm). Die Teststrecke muss mindestens 8 cm betragen. Die Bewertung der Hafteigenschaften erfolgt anhand des nach dem Abziehen der Raupe auf der Oberfläche zurückbleibenden Klebstoffs (Kohäsionsbruch), und zwar durch Abschätzen der kohäsiven Anteils der Haftfläche, gemäss folgender Skala:
1 = mehr als 95% Kohäsionsbruch
2 = 75 - 95% Kohäsionsbruch
3 = 25 - 75% Kohäsionsbruch
4 = weniger als 25% Kohäsionsbruch
5 = adhäsiver Bruch
Testresultate mit Kohäsionsbruchwerten von weniger als 75% gelten als ungenügend.

Die Ergebnisse der vorgenommenen Prüfungen sind in der Tabelle 5 aufgeführt.

| Tabelle 5: Haftung der erfindungsgemässen zweikomponentigen Polyurethanzusammensetzungen der Beispiele 1 bis 7 auf verschiedenen Festkörperoberflächen. | | | | | | |
|---|---|---|---|---|---|---|
| | Acryl-Decklack | | Aluminium | | Stahl | |
| | RT | KK | RT | KK | RT | KK |
| (Ref.)⁶ | 1 | 1 | 1 | 1 | 1 | 1 |
| Beispiel 1 | 1 | 1 | 1 | 1 | 1 | 1 |
| Beispiel 3 | 1 | 1 | 1 | 1 | 1 | 1 |
| Beispiel 5 | 2 | 1 | 1 | 1 | 1 | 1 |

| | | | | | | |
|---|---|---|---|---|---|---|
| ⁶ (Ref.)=Referenzwert: Gleicher Klebstoff wie für Beispiel 1 bis 7, aber erste Komponente **(A)** ohne Polyaldimin 1 und Benzoesäure. | | | | | | |

Die Ergebnisse in Tabelle 4 zeigen, dass die erfindungsgemässen zweikomponentigen Polyurethanzusammensetzungen der Beispiele 1 bis 7 eine hervorragende Haftung auf verschiedenen Untergründen aufweisen. Trotz dem sehr raschen Festigkeitsaufbau, der bei üblichen feuchtigkeitshärtenden Polyurethanzusammensetzungen bekannterweise oft zu Haftungseinbussen führt, unterscheiden sie sich damit in ihrem Haftungsverhalten nicht vom ohne Polyaldimin formulierten Referenzklebstoff.

### Vergleichsbeispiel 8 (Comp. 8)

Wie für die Beispiele 1 bis 7 beschrieben wurden 1250 g Prepolymer 1, 500 g Prepolymer 2, 1750 g Kaolin, 1240 g Harnstoff-Verdickungsmittel, 25 g 3-Glycidoxypropyltrimethoxysilan (Silquest^{®} A-187, OSi Crompton) und 50 g der Katalysatorlösung 1 zu einer homogenen Paste verarbeitet.

Die Prepolymere 1 und 2 und das Harnstoff-Verdickungsmittel wurden wie in den Beispielen 1 bis 7 beschrieben hergestellt.

Die Katalysatorlösung 1 wurde wie folgt hergestellt:
10 g 2,2'-Dimorpholinodiethylether (DMDEE) und 1 g Dibutylzinndilaurat (DBTDL; Metatin^{®} Katalysator 712, Acima / Rohm & Haas; Zinn-Gehalt 18.5 Gewichts-%) wurden mit 89 g Düsodecylphthalat (DIDP; Palatinol^{®} Z, BASF) vermengt und zu einer homogenen Lösung vermischt.

Die so erhaltene erste Komponente **(A)** wurde unmittelbar nach der Herstellung in Aluminium-Kartuschen mit einem Durchmesser von 45 mm abgefüllt, diese luftdicht verschlossen und im Ofen bei 60°C gelagert. Nach einem Tag wurde die erste Komponente **(A)** auf Auspresskraft geprüft, wie in den Beispielen 1 bis 7 beschrieben. Nach 7 Tagen wurde die Auspresskraft erneut gemessen.

Nach einem Tag Lagerung im Ofen bei 60°C wurde die erste Komponente **(A)** auf 80°C erwärmt und unter Beimischung der raumtemperaturwarmen zweiten Komponente **(B)** appliziert, wie für die Beispiele 1 bis 7 beschrieben. Der dadurch erhaltene Klebstoff wurde auf Frühfestigkeit und Blasenbildung geprüft, wie für die Beispiele 1 bis 7 beschrieben.

Die Ergebnisse der vorgenommenen Prüfungen sind in der Tabelle 6 aufgeführt.

| Tabelle 6: Eigenschaften der ersten Komponente **(A)** und der zweikomponentigen Polyurethanzusammensetzung des Vergleichsbeispiels Comp. 8. | | | | |
|---|---|---|---|---|
| | APK frisch⁷ Komp. **(A)** (N) | APK gelagert⁸ Komp. **(A)** (N) | Frühfestigkeif nach 240 min. (N/cm) | Blasenbildung |
| Comp. 8 | 603 | 860 | 35.3 | sehr viele⁹ |

| | | | | |
|---|---|---|---|---|
| ⁷ Auspresskraft nach einem Tag Lagerung bei 60 °C. ⁸ Auspresskraft nach 7 Tagen Lagerung bei 60 °C. ⁹ Blasen befinden sich vor allem in der Klebefläche zwischen Glas und Klebstoff (führt zu Adhäsivbruch bei Belastung). | | | | |

Die Ergebnisse in Tabelle 6 zeigen, dass die zweikomponentige Polyurethanzusammensetzung des Vergleichbeispiels 8, welche durch konventionelle NCO-Katalyse mittels Amin-/Zinn-Katalysator beschleunigt ist, bei der Applikation stark zur Blasenbildung neigt. Dadurch ist der Klebstoff in seinen mechanischen Eigenschaften nach der Aushärtung und vor allem auch in seinen Haftungseigenschaften (Adhäsionskraft) massiv beeinträchtigt, was zum Funktionsversagen einer Klebeverbindung führen kann.

### Vergleichsbeispiele 9 bis 12 (Comp. 9 bis Comp. 12)

Wie für Beispiele 1 bis 7 beschrieben wurden 1250 g Prepolymer 1, 500 g Prepolymer 2, 1750 g Kaolin, 1240 g Harnstoff-Verdickungsmittel, 25 g 3-Glycidoxypropyltrimethoxysilan (Silquest^{®} A-187, OSi Crompton) und 10 g Benzoesäure zu einer homogenen Paste verarbeitet.

Die Prepolymere 1 und 2 und das Harnstoff-Verdickungsmittel wurden wie in den Beispielen 1 bis 7 beschrieben hergestellt.

Für jedes der Vergleichsbeispiele Comp. 9 bis Comp. 12 wurden anschliessend je 1000 g dieser Paste mit der in Tabelle 7 für das jeweilige Beispiel aufgeführten Menge eines blockierten Härtungsmittels versetzt (für alle Beispiele im Verhältnis NH₂ / NCO = 0.70) und dieser unter Vakuum und Feuchtigkeitsausschluss homogen eingemischt.

Die so erhaltenen ersten Komponenten **(A)** wurden unmittelbar nach ihrer Herstellung in Aluminium-Kartuschen mit einem Durchmesser von 45 mm abgefüllt, diese luftdicht verschlossen und im Ofen bei 60°C gelagert. Nach einem Tag wurden die ersten Komponenten **(A)** auf Auspresskraft geprüft, wie in den Beispielen 1 bis 7 beschrieben. Nach 7 Tagen wurde die Auspresskraft erneut gemessen.

Nach einem Tag Lagerung im Ofen bei 60°C wurden die ersten Komponenten **(A)** auf 80°C erwärmt und unter Beimischung der raumtemperaturwarmen zweiten Komponente **(B)** appliziert, wie für die Beispiele 1 bis 7 beschrieben. Der dadurch erhaltene Klebstoff wurde auf Blasenbildung geprüft, wie für die Beispiele 1 bis 7 beschrieben.

Die Ergebnisse der vorgenommenen Prüfungen sind in der Tabelle 7 aufgeführt.

| Tabelle 7: Typ und Menge blockiertes Härtungsmittel in der ersten Komponente **(A),** Auspresskraft und Blasenbildung der zweikomponentigen Polyurethanzusammensetzungen der Vergleichsbeispiele Comp. 9 bis Comp. 12. | | | | | |
|---|---|---|---|---|---|
| | blockiertes Härtungsmittel in Komp. **(A)** | g Härtungs mittel/1000 g Paste | APK Komp. **(A)** frisch¹⁰ (N) | APK Komp. **(A)** gelagert¹¹ (N) | Blasenbildung |
| Comp. 9 | Polyaldimin 2 | 20.3 | 1290 | >2500 | keine |
| Comp. 10 | Polyketimin¹² | 19.3 | 1750 | >2500 | keine |
| Comp. 11 | Polyoxazolidin¹³ | 27.9 | 1330 | >2500 | keine |
| Comp. 12 | Ethylendiamin / Molekularsieb¹⁴ | 69.0 | 580 | 780 | viele |

| | | | | | |
|---|---|---|---|---|---|
| ¹⁰ Auspresskraft nach einem Tag Lagerung bei 60 °C. ¹¹ Auspresskraft nach 7 Tagen Lagerung bei 60 °C. ¹² Isophorondi(methyl-isobutyl-ketimin), CAS 66230-21-5 (Desmophen^{®} LS 2965, Bayer). ¹³ Härter OZ (Bayer). ¹⁴ Hergestellt durch Suspendieren von 10 g Ethylendiamin und 90 g aktiviertes Molekularsieb (4Ä) in 100 g Diisodecylphthalat (DIDP; Palatinol^{®} Z, BASF) und Rühren während 2 Tagen bei 23°C. | | | | | |

Die Ergebnisse in Tabelle 7 zeigen, dass die zweikomponentigen Polyurethanzusammensetzungen der Vergleichbeispiele Comp. 9 bis Comp.12 gegenüber den erfindungsgemässen zweikomponentigen Polyurethanzusammensetzungen der Beispiele 1 bis 7 allesamt Schwächen aufweisen. Die zweikomponentigen Polyurethanzusammensetzungen der Vergleichsbeispiele Comp. 9 bis Comp. 11 härten zwar blasenfrei aus; ihre ersten Komponenten **(A)** sind aber allesamt nicht lagerstabil, weil sie als blockierte Härtungsmittel Substanzen enthalten, die auch in Abwesenheit von Wasser mit aromatischen Isocyanaten reagieren. Das im Vergleichsbeispiel Comp. 9 verwendete Polyaldimin 2 ist aus einem Aldehyd aufgebaut, welcher in α-Stellung zur Formylgruppe eine C-H-Gruppierung aufweist. In den Vergleichsbeispielen Comp. 10 und Comp. 11 sind zwei von der Anwendung in PUR-Lacken bekannte blockierte Härtungsmittel enthalten, in Vergleichsbeispiel Comp. 10 ein Polyketimin und in Vergleichsbeispiel Comp. 11 ein Polyoxazolidin. Im Vergleichsbeispiel Comp. 12 wiederum ist die erste Komponente **(A),** die als blockiertes Härtungsmittel ein an Molekularsieb gebundenes Diamin enthält, zwar lagerstabil; der nach der Einmischung der zweiten Komponente **(B)** erhaltene Klebstoff neigt aber zur Blasenbildung, welche seine mechanischen Eigenschaften nach der Aushärtung beeinträchtigen und Schwächen im Haftungsverhalten zur Folge haben.

### Beispiel 13

Dieses Beispiel belegt die Herstellung einer erfindungsgemässen zweikomponentigen Polyurethanzusammensetzung und ihre Verwendung als Klebstoff.

In einem Vakuummischer wurden 1000 g Prepolymer 1, 1250 g Prepolymer 3, 1250 g Russ, 600 g Kaolin, 250 g Diisodecylphthalat (DIDP; Palatinol^{®} Z, BASF), 300 g Harnstoff-Verdickungsmittel, 25 g 3-Glycidoxypropyltrimethoxysilan (Silquest^{®} A-187, OSi Crompton), 325 g Polyaldimin 3 (d.h. NH₂/NCO = 0.66) und 5 g Benzoesäure unter Feuchtigkeitsausschluss zu einer knollenfreien, homogenen Paste verarbeitet.

Das Prepolymer 1 und das Harnstoff-Verdickungsmittel wurden wie in Beispiel 1 beschrieben hergestellt.

Das Prepolymer 3 wurde wie folgt hergestellt:
1770 g Polyol Acclaim^{®} 4200 N (Bayer) und 230 g 4,4'-Methylendiphenyldiisocyanat (MDI; Desmodur^{®} 44 MC L, Bayer) wurden nach bekanntem Verfahren bei 80°C zu einem NCO-terminierten Polyurethanprepolymeren umgesetzt. Das Reaktionsprodukt hatte einen titrimetrisch bestimmten Gehalt an freien Isocyanat-Gruppen von 1.97 Gewichts-%.

Die so erhaltene erste Komponente **(A)** wurde unmittelbar nach der Herstellung in Aluminium-Kartuschen mit einem Durchmesser von 45 mm abgefüllt, diese luftdicht verschlossen und im Ofen bei 60 °C gelagert. Nach einem Tag wurde die erste Komponente **(A)** auf Auspresskraft geprüft, wie in den Beispielen 1 bis 7 beschrieben. Nach 7 Tagen wurde die Auspresskraft erneut gemessen.

Nach einem Tag Lagerung im Ofen bei 60°C wurde die erste Komponente **(A)** auf 80 °C erwärmt und unter Beimischung der Raumtemperatur-warmen zweiten Komponente **(B)** appliziert, wie für die Beispiele 1 bis 7 beschrieben. Der dadurch erhaltene erfindungsgemässe Klebstoff wurde auf Blasenbildung sowie auf seine mechanischen Eigenschaften nach der Aushärtung geprüft, wie für die Beispiele 1 bis 7 beschrieben.

Die Ergebnisse der vorgenommenen Prüfungen sind in der Tabelle 8 aufgeführt.

| Tabelle 8: Auspresskraft der ersten Komponente **(A),** Blasenbildung und mechanische Eigenschaften der erfindungsgemässen zweikomponentigen Polyurethanzusammensetzung des Beispiels 13. | | | | | | |
|---|---|---|---|---|---|---|
| | APK Komp. **(A)** frisch¹⁵ (N) | APK Komp. **(A)** gelagert¹⁶ (N) | Blasenbildung | Zugfestigkeit (MPa) | E-Modul (MPa) | Bruchdehnung (%) |
| (Ref.)¹⁷ | 1220 | 1740 | viele | 8.1 | 7.3 | 360 |
| Beispiel 13 | 1115 | 1580 | keine | 7.9 | 6.8 | 500 |

| | | | | | | |
|---|---|---|---|---|---|---|
| ¹⁵ Auspresskraft nach einem Tag Lagerung bei 60 °C. ¹⁶ Auspresskraft nach 7 Tagen Lagerung bei 60 °C. ¹⁷ (Ref.)=Referenzwert: Gleicher Klebstoff wie für Beispiel 13, aber erste Komponente **(A)** ohne Polyaldimin 1 und Benzoesäure, dafür mit zusätzlich 150 g Diisodecylphthalat (DIDP; Palatinol^{®} Z, BASF) sowie mit 50 g Katalysator-Lösung 1 gemäss Beispiel 8. | | | | | | |

Die Ergebnisse in Tabelle 8 zeigen, dass die erste Komponente **(A)** der erfindungsgemässen zweikomponentigen Polyurethanzusammensetzung des Beispiels 13 über eine ähnlich gute Lagerstabilität verfügt wie die Polyaldimin-freie, durch konventionelle NCO-Katalyse mittels Amin-/Zinn-Katalysator beschleunigte erste Komponente **(A)** des Referenzklebstoffs. Im Gegensatz zum blasenanfälligen Referenzklebstoff härtet der erfindungsgemässe Klebstoff völlig blasenfrei aus. Er verfügt nach vollständiger Aushärtung über sehr gute Werte für die mechanischen Eigenschaften. Die Werte unterscheiden sich dabei nur geringfügig von jenen für den Referenzklebstoff; insbesondere tritt kein unerwünschter Anstieg der Werte für das E-Modul auf. Der Klebstoff des Beispiels 13 weist zu keiner Zeit einen störenden Geruch auf.

### Beispiele 14 und 15

Diese Beispiele belegen die Herstellung von erfindungsgemässen zweikomponentigen Polyurethanzusammensetzungen und ihre Verwendung als Klebstoffe.

Wie für Beispiel 13 beschrieben wurden 1000 g Prepolymer 1, 1250 g Prepolymer 3, 1250 g Russ, 600 g Kaolin, 250 g Diisodecylphthalat (DIDP; Palatinol^{®} Z, BASF), 300 g Harnstoff-Verdickungsmittel und 25 g 3-Glycidoxypropyltrimethoxysilan (Silquest^{®} A-187, OSi Crompton) unter Feuchtigkeitsausschluss zu einer homogenen Paste verarbeitet.

Das Prepolymer 1 und das Harnstoff-Verdickungsmittel wurden wie in Beispiel 1, das Prepolymer 3 wie in Beispiel 13 beschrieben hergestellt.

Für die Herstellung der ersten Komponenten **(A)** jedes der Beispiele 14 und 15 wurden anschliessend je 1000 g dieser Paste mit der in Tabelle 9 für das jeweilige Beispiel aufgeführten Typ und Menge an Säurekatalysator und Polyaldimin versetzt (jeweils dem angegebenen Verhältnis NH₂ / NCO entsprechend) und diese unter Vakuum homogen eingemischt.

| Tabelle 9: Typ und Menge Säurekatalysator und Polyaldimin, sowie Verhältnis NH₂ / NCO in den ersten Komponenten **(A)** der Beispiele 14 und 15. | | | |
|---|---|---|---|
| | Säurekatalysator, g/1000 g Paste | Polyaldimin, g/1000 g Paste | Verhältnis NH₂ / NCO |
| Beispiel 14 **(A)** | Salicylsäure, 5 | Polyaldimin 4, 32.4 | 0.66 |
| Beispiel 15 **(A)** | Benzoesäure, 5 | Polyaldimin 5, 19.2 | 0.66 |

Die so erhaltenen ersten Komponenten **(A)** wurden unmittelbar nach der Herstellung in Aluminium-Kartuschen mit einem Durchmesser von 45 mm abgefüllt, diese luftdicht verschlossen und im Ofen bei 60°C gelagert. Nach einem Tag wurden die ersten Komponenten **(A)** auf Auspresskraft geprüft, wie in den Beispielen 1 bis 7 beschrieben. Nach 7 Tagen wurde die Auspresskraft erneut gemessen.

Nach einem Tag Lagerung im Ofen bei 60°C wurden die ersten Komponenten **(A)** auf 80 °C erwärmt und jeweils unter Beimischung der raumtemperaturwarmen zweiten Komponente **(B)** appliziert, wie für die Beispiele 1 bis 7 beschrieben. Die dadurch erhaltenen erfindungsgemässen Klebstoffe wurden auf Blasenbildung sowie auf ihre mechanischen Eigenschaften nach der Aushärtung geprüft, wie für die Beispiele 1 bis 7 beschrieben.

Die Ergebnisse der vorgenommenen Prüfungen sind in der Tabelle 10 aufgeführt.

| Tabelle 10: Auspresskraft der ersten Komponenten **(A),** Blasenbildung und mechanische Eigenschaften der erfindungsgemässen zweikomponentigen Polyurethanzusammensetzungen der Beispiele 14 und 15. | | | | | | |
|---|---|---|---|---|---|---|
| | APK Komp. **(A)** frisch¹⁸ (N) | APK Komp. **(A)** gelagert¹⁹ (N) | Blasenbildung | Zugfestigkeit (MPa) | E-Modul (MPa) | Bruchdehnung (%) |
| Beispiel 14 | 1140 | 1600 | keine | 7.7 | 6.2 | 620 |
| Beispiel 15 | 1180 | 1620 | keine | 8.9 | 8.0 | 490 |

| | | | | | | |
|---|---|---|---|---|---|---|
| ¹⁸ Auspresskraft nach einem Tag Lagerung bei 60 °C. ¹⁹ Auspresskraft nach 7 Tagen Lagerung bei 60 °C. | | | | | | |

Die Ergebnisse in Tabelle 10 zeigen, dass die ersten Komponenten (**A**) der Beispiele 14 und 15 über eine gute Lagerstabilität verfügen. Die erfindungsgemässen zweikomponentigen Polyurethanzusammensetzungen der Beispiele 14 und 15 härten völlig blasenfrei aus und verfügen nach vollständiger Aushärtung über sehr gute Werte für die mechanischen Eigenschaften.

## Patentansprüche

1. Zweikomponentige Polyurethanzusammensetzung, bei welcher die erste Komponente **(A)**
- mindestens ein Polyurethanprepolymer mit Isocyanatendgruppen, hergestellt aus mindestens einem aromatischen Polyisocyanat und mindestens einem Polyol
und
- mindestens ein Polyaldimin, welches erhältlich ist aus mindestens einem Polyamin mit aliphatischen primären Aminogruppen und mindestens einem Aldehyd, der in α-Stellung zur Carbonylgruppe keine C-H-Gruppierung aufweist,
enthält;
und die zweite Komponente **(B)**
Wasser reversibel an ein Trägermaterial gebunden enthält.

2. Zweikomponentige Polyurethanzusammensetzung gemäss Anspruch 1, **dadurch gekennzeichnet, dass** der Aldehyd die Formel 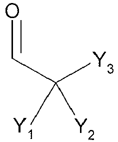 aufweist, wobei
Y₁, Y₂, Y₃ unabhängig voneinander, gegebenenfalls substituierte, Alkyl- oder Arylalkyl-Gruppen darstellen,
oder
Y₁ eine Oxy-Gruppe O-Y₄ darstellt, wobei Y₄ eine, gegebenenfalls substituierte, Alkyl- oder Arylalkyl- oder Aryl-Gruppe darstellt,
und
Y₂ und Y₃ unabhängig voneinander Alkyl- oder Arylalkyl-Gruppen, die gegebenenfalls jeweils substituiert sein können, darstellen,
oder
Y₁ und Y₂ miteinander zu einem carbocyclischen oder heterocyclischen Ring verbunden sind, welcher eine Ringgrösse zwischen 5 und 8, bevorzugt 6, Atomen, und gegebenenfalls eine oder zwei einfach ungesättigte Bindungen aufweist,
und
Y₃ eine, gegebenenfalls substituierte, Alkyl- oder Arylalkyl-Gruppe darstellt.

3. Zweikomponentige Polyurethanzusammensetzung gemäss Anspruch 1, **dadurch gekennzeichnet, dass** der Aldehyd die Formel 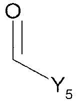 aufweist,
wobei Y₅ eine, gegebenenfalls substituierte, Aryl- oder Heteroaryl-Gruppe darstellt, welche eine Ringgrösse zwischen 5 und 8, bevorzugt 6, Atomen aufweist.

4. Zweikomponentige Polyurethanzusammensetzung gemäss Anspruch 1, **dadurch gekennzeichnet, dass** der Aldehyd die Formel 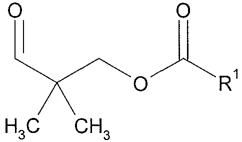 aufweist,
wobei R¹
entweder für
eine lineare oder verzweigte Alkylkette, gegebenenfalls mit mindestens einem Heteroatom, insbesondere mit mindestens einem Ether-Sauerstoff, oder für eine einfach oder mehrfach ungesättigte lineare oder verzweigte Kohlenwasserstoffkette steht;
oder für 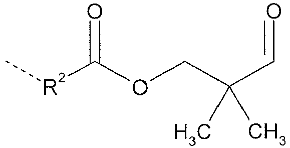 steht;
oder für 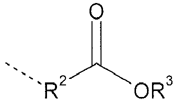 steht;
wobei R² für eine lineare oder verzweigte oder cyclische Alkylenkette, gegebenenfalls mit mindestens einem Heteroatom, insbesondere mit mindestens einem Ether-Sauerstoff, oder für eine einfach oder mehrfach ungesättigte lineare oder verzweigte oder cyclische Kohlenwasserstoffkette steht,
und
R³ für eine lineare oder verzweigte Alkylkette steht.

5. Zweikomponentige Polyurethanzusammensetzung gemäss Anspruch 4, **dadurch gekennzeichnet, dass** der Aldehyd die Formel 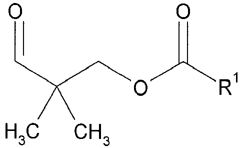 aufweist,
wobei R¹ entweder für
eine lineare oder verzweigte Alkylkette mit 11 bis 30 Kohlenstoffatomen, gegebenenfalls mit mindestens einem Heteroatom, insbesondere mit mindestens einem Ether-Sauerstoff, oder für eine einfach oder mehrfach ungesättigte lineare oder verzweigte Kohlenwasserstoffkette mit 11 bis 30 Kohlenstoffatomen steht;
oder für 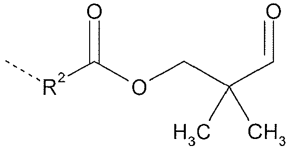 steht;
oder für 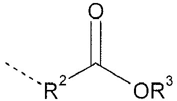 steht;
wobei R² für eine lineare oder verzweigte oder cyclische Alkylenkette mit 2 bis 16 Kohlenstoffatomen, gegebenenfalls mit mindestens einem Heteroatom, insbesondere mit mindestens einem Ether-Sauerstoff, oder für eine einfach oder mehrfach ungesättigte lineare oder verzweigte oder cyclische Kohlenwasserstoffkette mit 2 bis 16 Kohlenstoffatomen steht,
und
R³ für eine lineare oder verzweigte Alkylkette mit 1 bis 8 Kohlenstoffatomen steht.

6. Zweikomponentige Polyurethanzusammensetzung gemäss Anspruch 4 oder 5, **dadurch gekennzeichnet, dass** der für die Herstellung des Polyaldimins verwendete Aldehyd durch eine Veresterungsreaktion von 3-Hydroxypivalaldehyd mit einer Carbonsäure erhältlich ist, insbesondere ohne Verwendung eines Lösemittels, wobei 3-Hydroxypivalaldehyd gegebenenfalls in situ aus Formaldehyd, beziehungsweise Paraformaldehyd, und Isobutyraldehyd hergestellt wird.

7. Zweikomponentige Polyurethanzusammensetzung gemäss Anspruch 6, **dadurch gekennzeichnet, dass** die für die Herstellung des Aldehyds verwendete Carbonsäure ausgewählt ist aus der Gruppe umfassend Laurinsäure, Myristinsäure, Palmitinsäure, Stearinsäure, Ölsäure, Linolsäure, Linolensäure, Bernsteinsäure, Adipinsäure, Azelainsäure und Sebacinsäure.

8. Zweikomponentige Polyurethanzusammensetzung gemäss einem der vorhergehenden Ansprüche, **dadurch gekennzeichnet, dass** das Polyamin mit aliphatischen primären Aminogruppen ausgewählt ist aus der Gruppe bestehend aus 1,6-Hexamethylendiamin, MPMD, DAMP, IPDA, 4-Aminomethyl-1,8-octandiamin, 1,3-Xylylendiamin, 1,3-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo-[5.2.1.0^{2,6}]decan, 1,4-Diamino-2,2,6-trimethylcyclohexan, Polyoxyalkylen-Polyamine mit theoretisch zwei oder drei Aminogruppen, insbesondere Jeffamine^{®} EDR-148, Jeffamine^{®} D-230, Jeffamine^{®} D-400 und Jeffamine^{®} T-403, sowie Mischungen von zwei oder mehr der vorgenannten Polyamine.

9. Zweikomponentige Polyurethanzusammensetzung gemäss einem der vorhergehenden Ansprüche, **dadurch gekennzeichnet, dass** für die Herstellung des Polyaldimins der Aldehyd stöchiometrisch oder im stöchiometrischen Überschuss in Bezug auf die primären Aminogruppen des Polyamins eingesetzt wird.

10. Zweikomponentige Polyurethanzusammensetzung gemäss einem der vorhergehenden Ansprüche, **dadurch gekennzeichnet, dass** das Polyol für die Herstellung des Polyurethanprepolymers eine mittlere OH-Funktionalität von 1.6 bis 3 aufweist.

11. Zweikomponentige Polyurethanzusammensetzung gemäss Anspruch 10, **dadurch gekennzeichnet, dass** das Polyol ein Polyoxyalkylenpolyol, insbesondere ein Polyoxyalkylendiol oder -triol, insbesondere ein Polyoxypropylendiol oder -triol oder ein EO-endcapped Polyoxypropylendiol oder -triol ist.

12. Zweikomponentige Polyurethanzusammensetzung gemäss Anspruch 10 oder 11, **dadurch gekennzeichnet, dass** das Polyol ein Polyoxyalkylen-polyol mit einem Ungesättigtheitsgrad <0.02 mEq/g und einem Molekulargewicht Mₙ von 1'000 bis 30'000 g/mol ist.

13. Zweikomponentige Polyurethanzusammensetzung gemäss Anspruch 12, **dadurch gekennzeichnet, dass** das Polyol ein mittels DMC-Katalyse hergestelltes Polyol ist.

14. Zweikomponentige Polyurethanzusammensetzung gemäss einem der vorhergehenden Ansprüche, **dadurch gekennzeichnet, dass** das Polyurethanprepolymer und das Polyaldimin im Verhältnis von 0.1 bis 1.1, insbesondere von 0.5 bis 1.1, bevorzugt im Verhältnis von 0.6 bis 0.9 Equivalent Aldimingruppen pro Equivalent Isocyanatgruppen vorliegen.

15. Zweikomponentige Polyurethanzusammensetzung gemäss einem der vorhergehenden Ansprüche, **dadurch gekennzeichnet, dass** das Trägermaterial der zweiten Komponente (B) ein ionische Gruppen aufweisendes Polymer ist.

16. Zweikomponentige Polyurethanzusammensetzung gemäss einem der vorhergehenden Ansprüche, **dadurch gekennzeichnet, dass** das Verhältnis von eingesetzten Equivalenten Wasser zu eingesetzten Equivalenten Aldimingruppen 0.5 bis 10.0, insbesondere 1.0 bis 5.0, beträgt.

17. Zweikomponentige Polyurethanzusammensetzung gemäss Anspruch 16, **dadurch gekennzeichnet, dass** die zwei Komponenten im wesentlichen homogen gemischt werden.

18. Zweikomponentige Polyurethanzusammensetzung gemäss Anspruch 16, **dadurch gekennzeichnet, dass** die zwei Komponenten im wesentlichen schichtenartig gemischt werden.

19. Verfahren der Applikation einer zweikomponentigen Polyurethanzusammensetzung gemäss einem der Ansprüche 1 bis 18, **dadurch gekennzeichnet, dass** es die folgenden Schritte umfasst:
- Mischen der zwei Komponenten **(A)** und **(B)**
- Kontaktieren mindestens einer Festkörperoberfläche mit der gemischten Polyurethanzusammensetzung
- Aushärtung der gemischten Polyurethanzusammensetzung.

20. Verfahren der Applikation gemäss Anspruch 19, **dadurch gekennzeichnet, dass** das Kontaktieren der Festkörperoberfläche als Auftrag einer Raupe auf die Oberfläche erfolgt.

21. Verfahren der Applikation gemäss Anspruch 19 oder 20, **dadurch gekennzeichnet, dass** das Mischen der zwei Komponenten **(A)** und **(B)** mittels eines zwei ineinander greifende Dosierrotoren enthaltenden Dosieraufsatzes, sowie gegebenenfalls zusätzlich mittels eines an der Austrittsöffnung dieses Dosieraufsatzes angebrachten Statikmischers, erfolgt.

22. Verfahren nach Anspruch 21, **dadurch gekennzeichnet, dass** der Dosieraufsatz auf eine handelsübliche Kartusche aufgesetzt wird, welche die erste Komponente **(A)** enthält, und die zweite Komponente **(B)** in einem im Dosieraufsatz integrierten Behälter vorhanden ist.

23. Verwendung einer zweikomponentige Polyurethanzusammensetzung gemäss einem der Ansprüche 1 bis 18 als Klebstoff, Dichtstoff oder Belag, insbesondere als Klebstoff oder Dichtstoff.

## Claims

1. Two-component polyurethane composition in which the first component **(A)** comprises
- at least one polyurethane prepolymer containing isocyanate end groups, which is prepared from at least one aromatic polyisocyanate and at least one polyol,
and
- at least one polyaldimine which is obtainable from at least one polyamine containing aliphatic primary amino groups and at least one aldehyde which does not contain a C-H moiety positioned α to the carbonyl group;
and the second component **(B)** comprises water reversibly bound to a carrier material.

2. Two-component polyurethane composition according to Claim 1, **characterized in that** the aldehyde has the formula 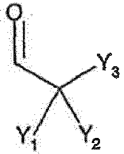 where
Y₁, Y₂ and Y₃ independently of one another are optionally substituted alkyl or aralkyl groups,
or
Y₁ is an oxy group O-Y₄, Y₄ being an optionally substituted alkyl or arylalkyl or aryl group,
and
Y₂ and Y₃ independently of one another are alkyl or arylalkyl groups each of which may optionally be substituted,
or
Y₁ and Y₂ are joined to one another to form a carbocyclic or heterocyclic ring which has a ring size of between 5 and 8, preferably 6, atoms and optionally has one or two singly unsaturated bonds,
and
Y₃ is an optionally substituted alkyl or arylalkyl group.

3. Two-component polyurethane composition according to Claim 1, **characterized in that** the aldehyde has the formula 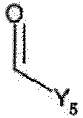 where Y₅ is an optionally substituted aryl or heteroaryl group which has a ring size of between 5 and 8, preferably 6, atoms.

4. Two-component polyurethane composition according to Claim 1, **characterized in that** the aldehyde has the formula 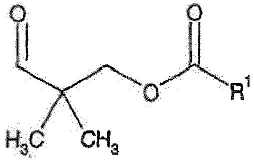
where R¹
alternatively is
a linear or branched alkyl chain, optionally containing at least one heteroatom, in particular containing at least one ether oxygen, or is a mono- or polyunsaturated linear or branched hydrocarbon chain;
or is 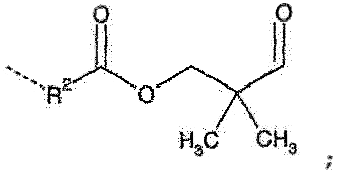 or is 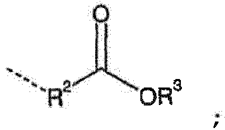
where R² is a linear or branched or cyclic alkylene chain, optionally containing at least one heteroatom, in particular containing at least one ether oxygen, or is a mono- or polyunsaturated linear or branched or cyclic hydrocarbon chain,
and
R³ is a linear or branched alkyl chain.

5. Two-component polyurethane composition according to Claim 4, **characterized in that** the aldehyde has the formula 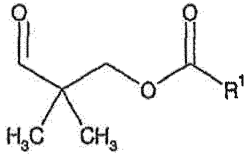
where R¹
alternatively is
a linear or branched alkyl chain having 11 to 30 carbon atoms, optionally containing at least one heteroatom, in particular containing at least one ether oxygen, or is a mono- or polyunsaturated linear or branched hydrocarbon chain having 11 to 30 carbon atoms;
or is 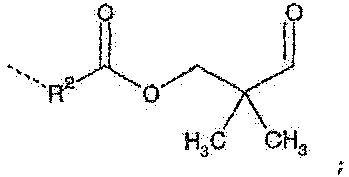 or is 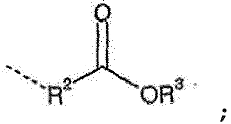
where R² is a linear or branched or cyclic alkylene chain having 2 to 16 carbon atoms, optionally containing at least one heteroatom, in particular containing at least one ether oxygen, or is a mono- or polyunsaturated linear or branched or cyclic hydrocarbon chain having 2 to 16 carbon atoms,
and
R³ is a linear or branched alkyl chain having 1 to 8 carbon atoms.

6. Two-component polyurethane composition according to Claim 4 or 5, **characterized in that** the aldehyde used for preparing the polyaldimine is obtainable by an esterification reaction of 3-hydroxypivalaldehyde with a carboxylic acid, in particular without using a solvent, 3-hydroxy-pivalaldehyde being prepared if desired in situ from formaldehyde, or paraformaldehyde, and isobutyraldehyde.

7. Two-component polyurethane composition according to Claim 6, **characterized in that** the carboxylic acid used for preparing the aldehyde is selected from the group consisting of lauric acid, myristic acid, palmitic acid, stearic acid, oleic acid, linoleic acid, linolenic acid, succinic acid, adipic acid, azelaic acid and sebacic acid.

8. Two-component polyurethane composition according to one of the preceding claims, **characterized in that** the polyamine containing aliphatic primary amino groups is selected from the group consisting of 1,6-hexamethylenediamine, MPMD, DAMP, IPDA, 4-aminomethyl-1,8-octanediamine, 1,3-xylylenediamine, 1,3-bis(aminomethyl)cyclohexane, bis(4-aminocyclohexyl)methane, bis(4-amino-3-methylcyclohexyl)methane, 3(4),8(9)-bis(aminomethyl)tricyclo[5.2.1.0^{2,6}]decane, 1,4-diamino-2,2,6-trimethylcyclohexane, polyoxyalkylene-polyamines having theoretically two or three amino groups, especially Jeffamine^{®} EDR-148, Jeffamine^{®} D-230, Jeffamine^{®} D-400 and Jeffamine^{®} T-403, and also mixtures of two or more of the aforementioned polyamines.

9. Two-component polyurethane composition according to one of the preceding claims, **characterized in that** for preparing the polyaldimine the aldehyde is used stoichiometrically or in a stoichiometric excess in relation to the primary amino groups of the polyamine.

10. Two-component polyurethane composition according to one of the preceding claims, **characterized in that** the polyol for preparing the polyurethane prepolymer has an average OH functionality of from 1.6 to 3.

11. Two-component polyurethane composition according to Claim 10, **characterized in that** the polyol is a polyoxyalkylene polyol, in particular a polyoxyalkylene diol or polyoxyalkylene triol, in particular a polyoxypropylene diol or polyoxypropylene triol or an EO-endcapped polyoxypropylene diol or triol.

12. Two-component polyurethane composition according to Claim 10 or 11, **characterized in that** the polyol is a polyoxyalkylene polyol having a degree of unsaturation <0.02 meq/g and a molecular weight Mₙ of from 1000 to 30 000 g/mol.

13. Two-component polyurethane composition according to Claim 12, **characterized in that** the polyol is a polyol prepared by means of DMC catalysis.

14. Two-component polyurethane composition according to one of the preceding claims, **characterized in that** the polyurethane prepolymer and the polyaldimine are in a ratio of from 0.1 to 1.1, in particular from 0.5 to 1.1, preferably in a ratio of from 0.6 to 0.9 equivalent of aldimine groups per equivalent of isocyanate groups.

15. Two-component polyurethane composition according to one of the preceding claims, **characterized in that** the carrier material of the second component (**B**) is a polymer containing ionic groups.

16. Two-component polyurethane composition according to one of the preceding claims, **characterized in that** the ratio of equivalents of water used to equivalents of aldimine groups used is from 0.5 to 10.0, in particular from 1.0 to 5.0.

17. Two-component polyurethane composition according to Claim 16, **characterized in that** the two components are mixed essentially homogeneously.

18. Two-component polyurethane composition according to Claim 16, **characterized in that** the two components are mixed in an essentially layerlike manner.

19. Process for applying a two-component polyurethane composition according to one of Claims 1 to 18, **characterized in that** it comprises the following steps:
- mixing the two components **(A)** and **(B)**
- contacting at least one solids surface with the mixed polyurethane composition
- curing the mixed polyurethane composition.

20. Process for applying according to Claim 19, **characterized in that** the contacting of the solids surface takes place by applying a bead to the surface.

21. Process for applying according to Claim 19 or 20, **characterized in that** the mixing of the two components **(A)** and **(B)** takes place by means of a metering attachment comprising two interengaging metering rotors, and also, if desired, additionally by means of a static mixer mounted at the exit aperture of this metering attachment.

22. Process according to Claim 21, **characterized in that** the metering attachment is mounted on a commercially customary cartridge which comprises the first component (**A**), and the second component **(B)** is in a container integrated in the metering attachment.

23. Use of a two-component polyurethane composition according to one of Claims 1 to 18 as an adhesive, sealant or covering, in particular as an adhesive or sealant.

## Revendications

1. Composition de polyuréthane à deux composants, dans laquelle le premier composant (A) contient
- au moins un prépolymère de polyuréthane présentant des groupes terminaux isocyanate, préparé à partir d'au moins un polyisocyanate aromatique et d'au moins un polyol et
- au moins une polyaldimine, qui peut être obtenue à partir d'au moins une polyamine, présentant des groupes amino primaire aliphatique, et d'au moins un aldéhyde, qui ne présente pas de groupement C-H en position α par rapport au groupe carbonyle ;
et le deuxième composant (B) contient de l'eau liée de manière réversible à un matériau support.

2. Composition de polyuréthane à deux composants selon la revendication 1, **caractérisée en ce que** l'aldéhyde présente la formule 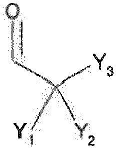 dans laquelle
Y₁ Y₂, Y₃ représentent, indépendamment les uns des autres, des groupes alkyle ou arylalkyle le cas échéant substitués ou
Y₁ représente un groupe oxy O-Y₄, Y₄ représentant un groupe alkyle ou arylalkyle ou aryle le cas échéant substitué et
Y₂ et Y₃ représentent, indépendamment l'un de l'autre, des groupes alkyle ou arylalkyle qui peuvent le cas échéant à chaque fois être substitués ou
Y₁ et Y₂ sont liés l'un à l'autre en un cycle carbocyclique ou hétérocyclique, qui présente une dimension de cycle entre 5 et 8, de préférence de 6, atomes et qui présente le cas échéant une ou deux liaisons monoinsaturées et
Y₃ représente un groupe alkyle ou arylalkyle le cas échéant substitué.

3. Composition de polyuréthane à deux composants selon la revendication 1, **caractérisée en ce que** l'aldéhyde présente la formule 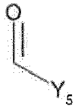 dans laquelle
Y₅ représente un groupe aryle ou hétéroaryle, le cas échéant substitué, qui présente une dimension de cycle entre 5 et 8, de préférence de 6, atomes.

4. Composition de polyuréthane à deux composants selon la revendication 1, **caractérisée en ce que** l'aldéhyde présente la formule 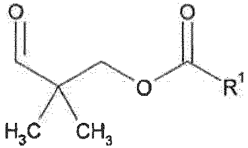 dans laquelle
R¹ représente soit une chaîne alkyle linéaire ou ramifiée, présentant le cas échéant au moins un hétéroatome, présentant en particulier au moins un oxygène à fonction éther, ou une chaîne hydrocarbonée linéaire ou ramifiée, monoinsaturée ou polyinsaturée ;
soit 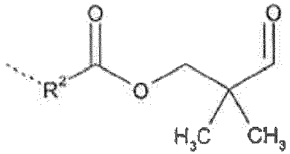 soit 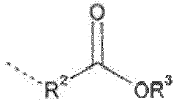 dans lesquelles
R² représente une chaîne alkylène linéaire ou ramifiée ou cyclique, présentant le cas échéant au moins un hétéroatome, présentant en particulier au moins un oxygène à fonction éther, ou une chaîne hydrocarbonée linéaire ou ramifiée ou cyclique, monoinsaturée ou polyinsaturée ; et
R³ représente une chaîne alkyle linéaire ou ramifiée.

5. Composition de polyuréthane à deux composants selon la revendication 4, **caractérisée en ce que** l'aldéhyde présente la formule 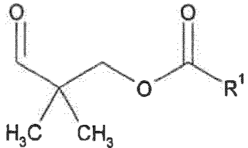 dans laquelle
R¹ représente soit une chaîne alkyle linéaire ou ramifiée, comprenant 11 à 30 atomes de carbone, présentant le cas échéant au moins un hétéroatome, présentant en particulier au moins un oxygène à fonction éther, ou une chaîne hydrocarbonée linéaire ou ramifiée, monoinsaturée ou polyinsaturée, comprenant 11 à 30 atomes de carbone ;
soit 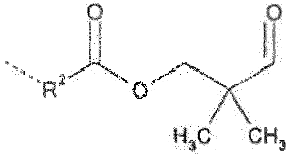 soit 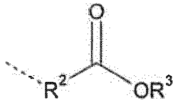 dans lesquelles
R² représente une chaîne alkylène linéaire ou ramifiée ou cyclique comprenant 2 à 16 atomes de carbone, présentant le cas échéant au moins un hétéroatome, présentant en particulier au moins un oxygène à fonction éther, ou une chaîne hydrocarbonée linéaire ou ramifiée ou cyclique, monoinsaturée ou polyinsaturée, comprenant 2 à 16 atomes de carbone ; et
R³ représente une chaîne alkyle linéaire ou ramifiée comprenant 1 à 8 atomes de carbone.

6. Composition de polyuréthane à deux composants selon la revendication 4 ou 5, **caractérisée en ce que** l'aldéhyde utilisé pour la préparation de la polyaldimine peut être obtenu par une réaction d'estérification de 3-hydroxypivalaldéhyde avec un acide carboxylique, en particulier sans utiliser de solvant, le 3-hydroxypivalaldéhyde étant le cas échéant préparé in situ à partir de formaldéhyde, ou, selon le cas, de paraformaldéhyde, et d'isobutyraldéhyde.

7. Composition de polyuréthane à deux composants selon la revendication 6, **caractérisée en ce que** l'acide carboxylique utilisé pour la préparation de l'aldéhyde est choisi dans le groupe comprenant l'acide laurique, l'acide myristique, l'acide palmitique, l'acide stéarique, l'acide oléique, l'acide linoléique, l'acide linolénique, l'acide succinique, l'acide adipique, l'acide azélaïque et l'acide sébacique.

8. Composition de polyuréthane à deux composants selon l'une quelconque des revendications précédentes, **caractérisée en ce que** la polyamine présentant des groupes amino primaire aliphatique est choisie dans le groupe constitué par la 1,6-hexaméthylènediamine, la MPMD, la DAMP, l'IPDA, la 4-aminométhyl-1,8-octanediamine, la 1,3-xylylènediamine, le 1,3-bis-(aminométhyl)cyclohexane, le bis-(4-aminocyclohexyl)-méthane, le bis-(4-amino-3-méthylcyclohexyl)-méthane, le 3(4),8(9)-bis-(aminométhyl)-tricyclo-[5,2,1,0^{2,6}]décane, le 1,4-diamino-2,2,6-triméthylcyclohexane, les polyoxyalkylènepolyamines présentant en théorie deux ou trois groupes amino, en particulier Jeffamine® EDR-148, Jeffamine® D-230, Jeffamine® D-400 et Jeffamine® T-403, ainsi que des mélanges de deux des polyamines susmentionnées ou plus.

9. Composition de polyuréthane à deux composants selon l'une quelconque des revendications précédentes, **caractérisée en ce que**, pour la préparation de la polyaldimine, l'aldéhyde est utilisé en quantité stoechiométrique ou en excès stoechiométrique par rapport aux groupes amino primaire de la polyamine.

10. Composition de polyuréthane à deux composants selon l'une quelconque des revendications précédentes, **caractérisée en ce que** le polyol pour la préparation du prépolymère de polyuréthane présente une fonctionnalité OH moyenne de 1,6 à 3.

11. Composition de polyuréthane à deux composants selon la revendication 10, **caractérisée en ce que** le polyol est un polyoxyalkylènepolyol, en particulier un polyoxyalkylènediol ou un polyoxyalkylènetriol, en particulier un polyoxypropylènediol ou un polyoxypropylènetriol ; ou un polyoxypropylènediol ou un polyoxypropylènetriol terminé par de l'oxyde d'éthylène.

12. Composition de polyuréthane à deux composants selon la revendication 10 ou 11, **caractérisée en ce que** le polyol est un polyoxyalkylènepolyol présentant un degré d'insaturation < 0,02 méquiv/g et un poids moléculaire Mₙ de 1000 à 30.000 g/mole.

13. Composition de polyuréthane à deux composants selon la revendication 12, **caractérisée en ce que** le polyol est un polyol préparé par catalyse DMC.

14. Composition de polyuréthane à deux composants selon l'une quelconque des revendications précédentes, **caractérisée en ce que** le prépolymère de polyuréthane et la polyaldimine se trouvent dans un rapport de 0,1 à 1,1, en particulier de 0,5 à 1,1, de préférence dans un rapport de 0,6 à 0,9 équivalent de groupes aldimine par équivalent de groupes isocyanate.

15. Composition de polyuréthane à deux composants selon l'une quelconque des revendications précédentes, **caractérisée en ce que** le matériau support du deuxième composant (B) est un polymère présentant des groupes ioniques.

16. Composition de polyuréthane à deux composants selon l'une quelconque des revendications précédentes, **caractérisée en ce que** le rapport d'équivalents utilisés d'eau aux équivalents utilisés de groupes aldimine est de 0,5 à 10,0, en particulier de 1,0 à 5,0.

17. Composition de polyuréthane à deux composants selon la revendication 16, **caractérisée en ce que** les deux composants sont mélangés de manière essentiellement homogène.

18. Composition de polyuréthane à deux composants selon la revendication 16, **caractérisée en ce que** les deux composants sont mélangés de manière essentiellement en couches.

19. Procédé pour l'application d'une composition de polyuréthane à deux composants selon l'une quelconque des revendications 1 à 18, **caractérisé en ce qu'**il comprend les étapes suivantes :
- mélange des deux composants (A) et (B)
- mise en contact d'au moins une surface d'un corps solide avec la composition de polyuréthane mélangée
- durcissement de la composition de polyuréthane mélangée.

20. Procédé d'application selon la revendication 19, **caractérisé en ce que** la mise en contact de la surface d'un corps solide est réalisée comme l'application d'un cordon sur la surface.

21. Procédé d'application selon la revendication 19 ou 20, **caractérisé en ce que** le mélange des deux composants (A) et (B) a lieu au moyen d'un embout de dosage contenant deux rotors de dosage s'engrenant l'un dans l'autre ainsi que le cas échéant en outre au moyen d'un mélangeur statique disposé au niveau de l'ouverture de sortie de cet embout de dosage.

22. Procédé selon la revendication 21, **caractérisé en ce que** l'embout de dosage est placé sur une cartouche usuelle du commerce qui contient le premier composant (A) et le deuxième composant (B) se trouve dans un récipient intégré dans l'embout de dosage.

23. Utilisation d'une composition de polyuréthane à deux composants selon l'une quelconque des revendications 1 à 18 comme adhésif, masse d'étanchéité ou revêtement, en particulier comme adhésif ou masse d'étanchéité.
